(19) Europäisches Patentamt / European Patent Office / Office européen des brevets

(11) **EP 4 518 080 B1**

(12) **EUROPEAN PATENT SPECIFICATION**

(45) Date of publication and mention
of the grant of the patent:
**25.02.2026 Bulletin 2026/09**

(21) Application number: **23193613.9**

(22) Date of filing: **26.08.2023**

(51) International Patent Classification (IPC):
*H02J 7/00* (2026.01)   *G06F 1/26* (2006.01)
*H02J 7/04* (2006.01)

(52) Cooperative Patent Classification (CPC):
**H02J 7/44; G06F 1/266; H02J 7/04; H02J 7/42;
H02J 7/933;** H02J 2207/30

(54) **POWER ADAPTER FOR CHARGING A RECHARGEABLE DEVICE**

LEISTUNGSADAPTER ZUM LADEN EINES WIEDERAUFLADBAREN GERÄTES

ADAPTATEUR D'ALIMENTATION POUR CHARGER UN DISPOSITIF RECHARGEABLE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**05.03.2025 Bulletin 2025/10**

(73) Proprietor: **Wattnex Technologies Sarl
1400 Yverdon-les-Bains (CH)**

(72) Inventor: **Tombez, Lionel
2022 Bevaix (CH)**

(74) Representative: **Jacobs, Lambert
Inventrans BV
Overwegstraat 24
3740 Bilzen (BE)**

(56) References cited:
**US-A1- 2017 279 270    US-A1- 2017 293 335
US-A1- 2020 373 843    US-A1- 2021 318 738**

**Description**

**Field of the invention**

The present invention relates in general to the field of devices for charging rechargeable devices, and in particular to power adapter devices for charging rechargeable devices comprising a USB-C port and a processor for communicating over the USB-C port and a power management unit connected to a rechargeable battery.

**Background of the invention**

Portable devices such as smartphones, tablet computers, laptop computers, drones etc. are known in the art. They have an internal battery which needs to be recharged regularly, typically daily.

Screen resolutions, bandwidth and processing requirements have increased dramatically in recent years, and as a result battery capacity has also increased. Large efforts are done to increase battery capacity, while keeping the charging time limited, which is mainly achieved by using a higher charging current. Various battery types are being used, such as e.g. Lithium-Ion batteries, and Lithium-Polymer batteries, having different charging requirements and characteristics which are taken care of by circuits inside the portable devices.

Many of these portable devices nowadays have a USB-C connector, which allows them to be charged with a power of up to 60 Watt (20 Volt x 3 Amps) with a standard USB-C cable, or even higher when using a special USB-C cable.

USB Type-C™, in short "USB-C" is a standard. The USB Type-C specification was first released in August 2014. The USB Type-C cable is a reversible 24-pin interconnect created by the USB interface. The default USB Type-C current capabilities are 500 mA at 5V for USB 2.0; 900 mA at 5V (i.e. 4.5 Watts) for USB 3.0.

It is possible to charge faster using a 5V/1.5A DCP (dedicated charger port), as defined in the Battery Charger standard BC1.2. The two USB data wires D+ and D- are connected together at the adapter output port.

Documents US 2017/293335 A1, US 2021/318738 A1, US 2017/279270 A1 and US 2020/373843 A1 disclose to provide a Power Data Object POD list from a power adapter to a power receiving device. The list comprising the possible voltage and power output capabilities of the power adapter.

Battery capacity of rechargeable devices (such as portable phones, in particular smart phones) is increasing for at least 2 decades, and the power required for charging these devices is also increasing. As a consequence, the environmental footprint of rechargeable devices represents an important challenge in terms of energy required for manufacturing and operating such devices, carbon footprint, and use of raw materials (e.g. Lithium and rare-earth metals).

There is always room for improvements or alternatives.

**Summary of the invention**

It is an object of embodiments of the present invention to provide a power adapter device for charging a rechargeable device (e.g. a portable phone, a smartphone, a laptop, a drone) having a USB-C port and an internal battery.

It is also an object to provide a kit of parts or assembly comprising such a power adapter and a rechargeable device (e.g. a portable device such as a smartphone, a tablet, a laptop, a drone).

It is an object of embodiments of the present invention to provide a power adapter device that is more environment-friendly, and/or more eco-friendly (e.g. by allowing a prolonged lifetime of the rechargeable devices), and/or is safer to charge, and/or is more energy-efficient (e.g. by providing a current smaller than the maximum current that the rechargeable device would normally use for charging)

It is an object of embodiments of the present invention to provide a power adapter device that offers more control to the user about the charging speed, even if the rechargeable device itself does not provide such control.

It is an object of embodiments of the present invention to provide a power adapter device that is capable of charging a wide variety of devices (as long as they have a USB-C input port) with a wide range of charging requirements (e.g. having different battery capacity, different current requirements, etc.), preferably while still offering at least some control about the charging speed to the user.

It is an object of embodiments of the present invention to provide a power adapter device that is more compact.

It is an object of embodiments of the present invention to provide a power adapter device that satisfies two or more or all of the above mentioned objectives.

These and other objectives are accomplished by embodiments of the present invention.

According to a first aspect, the present invention provides a power adapter device for charging a rechargeable device (e.g. a portable device) having a (e.g. female) USB-C port and a processor for communicating over the USB-C port and a power management unit connected to a rechargeable battery; the power adapter device comprising: an input port (e.g. comprising input terminals or an input connector) for receiving input power from an external power source (e.g. from a mains supply, from a battery pack, from a solar panel, from a laptop, etc.); a USB-C connector connectable (directly or indirectly, e.g. via a USB-C cable) to said USB-C port of said rechargeable device for providing output power; an electrical circuit (e.g. "power converter circuit" or "voltage converter circuit") having an input node connected to said input port for receiving said input power, and having an output node connected to said USB-C connector (e.g. to the VBUS pins thereof) for providing said output power (e.g. at a predefined voltage level or at a configurable voltage level); a controller connected to the USB-C connector and configured for communicating with the processor of the rechargeable device in accordance with a predefined protocol (e.g. to exchange information about power profile and/or about source capabilities of the power adapter device); wherein the power adapter device has a first mode of operation wherein the controller is configured to inform the rechargeable device of first source capabilities the power adapter device is capable to deliver, by providing a first list of Data Objects (or "data records" or "data structures") comprising at least one Data Object with a first (e.g. fixed) supply voltage value and an associated first current value; and wherein the power adapter device is configurable (e.g. by a user) in a second mode of operation to inform the rechargeable device at least once of second source capabilities that includes at least one capability with said first (e.g. fixed) supply voltage and an associated second current value smaller than the first current value, and to configure the electrical circuit accordingly.

The input port may be a wall-plug, or a connector (e.g. a USB-C connector).

The USB-C connector may be a physical connector on a housing of the power adapter device, or may be a physical connector situated at the end of a cable integrally formed with the power adapter device.

The rechargeable device typically has "an input control loop" (to limit the maximum current that is drawn) and "a battery control loop" (to control the voltage and current applied to the internal battery when charging.

As far as is known to the inventors, existing chargers for rechargeable devices with a battery, such as e.g. laptop computers, iPads, tablets, smartphones, etc. have only one mode of operation. Such a device has a housing and has components which are designed and dimensioned to process the first amount of power and to withstand the related heat dissipation. When sold together with a rechargeable device, such as a smartphone, such chargers are typically designed for charging the device safely, but "as quickly as possible", e.g. taking into account a lifetime of the battery which is only marginally longer than the warrantee period of the device.

The power adapter device of the present invention allows the rechargeable device to be charged quickly as in the prior art, but additionally has a second mode of operation that allows a user to charge the rechargeable device more slowly (e.g. during the night), in order to prolong the lifetime of the rechargeable device. The power adapter of the present invention is therefore more environment-friendly. In addition, when the input port is connected to a mains supply, the peak load on the power grid is reduced. This may not be significant for a single rechargeable device, but it is significant when considering the multitude of rechargeable devices world-wide that need to be charged on a daily basis.

With a "first fixed supply voltage" is meant a supply voltage having a first nominal value (within a certain tolerance margin) if a current smaller than or equal to the associated current value is drawn by the rechargeable device.

In some embodiments, the power adapter device may be referred to as a "power limiting device".

The electrical circuit may comprise one or more of the following: a voltage regulator, a DC-DC convertor, an AC-to-DC convertor, a switch.

In an embodiment, the protocol is compatible with the USB Power Delivery specification (e.g. version 2.0 or higher); and the Data Objects are Power Data Objects according to the USB Power Delivery specification; and the controller is configured for informing the source capabilities via the CC lines of the USB-C connector.

This embodiment makes use of the USB Power Delivery protocol, which is a single-ended, 1-wire protocol created by the USB-IF which specifies the methods for serial communication over the USB Type-C CC wire. The term "fixed voltage" has a specific meaning in the context of source PDO's of a USB-C specification (namely: bits 31-30), as opposed to "variable supply".

In embodiments of the present invention, the list of Data Objects may comprise a Data Object including a first voltage value and a second voltage value, the first and second voltage value defining a voltage range (e.g. 3V to 11V) rather than a fixed supply voltage. The Data Object also comprises an associated maximum current value (e.g. a first current value according to a first mode of operation, and a second reduced current value according to a second mode of operation). The Data Object may be an Augmented PDO (APDO) complying with the Programmable Power Supply (PPS) definition of the USB 3.0 specification. For example, the power adapter device may be arranged for advertising a first Data Object (e.g. a first APDO) comprising a first voltage range and a first maximum current value, and a second Data Object (e.g. a second APDO) comprising a second voltage range and a second maximum current value. The first and second ranges can be the same or different voltage ranges. In one example, the second maximum current value is reduced with respect to the first maximum current value. The first APDO may correspond to a fast-charging mode, and the second APDO may correspond to an ecocharging mode. In an embodiment, the maximum current value is determined as a function of the charging voltage requested by the rechargeable device within the advertised voltage range.

In an embodiment, the controller of the power adapter device is configured to perform a negotiation over the CC lines of the USB-C connector; and the controller of the power adapter device is configured to control the electrical circuit based on an outcome of the negotiation.

As an example, if multiple voltages are proposed by the power adapter, and if the controller and the processor come to an agreement about which of the proposed voltages is to be used, the controller will configure the electrical circuit to provide the agreed-upon voltage level.

In an embodiment, when the power adapter device is configured in the second mode of operation, the controller is configured to inform the processor at least once of said second source capabilities by providing (e.g. advertising) a second list of Data-Objects (or "data records", e.g. PDO's) comprising at least one Data Object with said first (e.g. fixed) supply voltage value and said associated second current value.

As an example, the first list may for example have two Data Objects (DO's), namely DO1a with values (5V, 3A) corresponding to 15W, and DO1b with values (9V, 3A) corresponding to 27W, and the second list may for example have a single DO1b with values (5V, 1A) corresponding to 5W, and optionally a second DO2b with values (9V, 0.5A) corresponding to 4.5W.

In an embodiment, the controller is configured to determine a minimum acceptable power (or a power value close to the minimum, e.g. within a margin of about 20%) that the rechargeable device is willing to accept, and to provide an output power compatible with that minimum acceptable power.

It is an advantage of this embodiment, that it can find a minimum noted that the power adapter device may use "current measurement means" in order to detect tdoe. As an example, the first list may for example have two Data Objects (DO's), namely DO1a with values (5V, 1A) corresponding to 5W, and DO1b with values (9V, 3A) corresponding to 27W, and the second list may for example have a single DO1b with values (5V, 0.4A) corresponding to 2W, and optionally a second DO2b with values (9V, 0.5A) corresponding to 4.5W.

In an embodiment, the power adapter device is configured to determine, in the second mode of operation, a minimum acceptable power that the rechargeable device is willing to accept, by proposing at least two, or at least three, or at least four different source capabilities.

In an embodiment, the power adapter device is configured to propose (e.g. present or advertise) at a first moment in time a second list with one or more Data-Objects specifying initial current values (e.g. corresponding to relatively low power values); and if at least one of these DOs is acceptable to the rechargeable device, to agree upon a DO from this list that is acceptable; and if none of these proposed DOs is acceptable to the rechargeable device, to propose at least once, another second list with one or more DOs specifying updated current values higher than the previously proposed values; and if at least one of these proposed DOs is acceptable to the rechargeable device, to agree upon a DO from this updated list that is acceptable; and if none of these proposed DOs is acceptable to the rechargeable device, to repeat the step of proposing another second list until at least one of the DOs is acceptable to the rechargeable device.

In an embodiment, in each iteration, the power may be increased by a predefined ratio, e.g. by a factor in the range from 1.1 to 1.6, on in the range from 1.2 to 1.5, e.g. by factor of about 1.2, or about 1.3 or about 1.4 or about 1.5.

In a variant, the power adapter device may be configured to first gradually increase the current values, as described above, but once an acceptable value is found, to gradually decrease again, for example using a smaller stepsize.

In an embodiment, the power adapter device is configured to propose (e.g. present or advertise) at a first moment in time a second list with one or more DOs specifying initial current values (e.g. corresponding to relatively high power values), and to propose at least once, another second list with one or more DOs specifying updated current value lower than the previously proposed values; and if none of these proposed DOs is acceptable to the rechargeable device, to agree upon a DO from the previously proposed second list that was acceptable; and if at least one of these proposed DOs is acceptable to the rechargeable device, to repeat the step of proposing another second list until a predefined number of iterations is performed, or until the updated power values are below a predefined threshold.

In an embodiment, the predefined number of iterations, or the lower current limit is dependent on a selection means (e.g. dependent on the position of a rotary button, or dependent on the position of a slider, or the like).

In an embodiment, in each iteration, the power may be reduced by a predefined ratio, e.g. by a factor in the range from 1.1 to 1.6, on in the range from 1.2 to 1.5, e.g. by factor of about 1.2, or about 1.3 or about 1.4 or about 1.5.

In a variant, the power adapter device may be configured to first gradually decrease the current values, as described above, but once an unacceptable value is found, to gradually increase again, for example using a smaller stepsize.

The electrical circuit may be configured for receiving the input power with an input voltage and an input current, and may be configured for providing the output power with an output voltage and an output current, wherein the output voltage may be lower than or higher than or substantially equal to the input voltage.

In an embodiment, the electrical circuit comprises a DC/DC convertor.

In an embodiment, the electrical circuit comprises an AC/DC convertor.

In an embodiment, the electrical circuit comprises an AC/DC convertor followed by a DC/DC convertor.

In an embodiment, the electrical circuit is configured to provide a fixed supply voltage, e.g. a fixed supply voltage advertised by the controller, and agreed upon by the processor.

In an embodiment, the electrical circuit is configurable to provide a supply voltage selected from a group comprising or consisting of 5V and 9V, or selected from a group comprising or consisting of 5V, 9V and 15V, or selected from a group comprising or consisting of 5V, 9V, 15V and 20V.

In an embodiment, the first list and optionally also the second list of Data Objects (e.g. PDO's) comprises only Data Objects with a variable supply voltage.

In an embodiment, the first list and optionally also the second list of Data Objects (e.g. PDO's) comprises at least one Data Object with a fixed supply voltage and at least one Data Object with a variable supply voltage.

In an embodiment, the first list and optionally also the second list of Data Objects (e.g. PDO's) comprises only Data Object with a fixed supply voltage, i.e. does not comprise Data Object with a variable supply voltage.

In an embodiment, the first list of source capabilities comprises at least two Data Objects (e.g. PDO's).

In an embodiment, the first list of source capabilities comprises at least two Data Objects (e.g. PDO's), and the second list comprises at least one Data Object (e.g. PDO).

In an embodiment, the first list has a first number of Data Objects (e.g. PDO's), and the second list has a second number of Data Objects (e.g. PDO's) equal to, smaller than, or larger than the first number.

In an embodiment, the second list of Data Objects comprises at least one Data Object with a first fixed supply voltage (e.g. 5V) and a third associated current value together defining a first power value (P1), and one Data Object with a second fixed supply voltage (e.g.9V) and a fourth associated current value together defining a second power value (P2); and the fourth associated current value is chosen such that a ratio (P2/P1) of the second power and the first power is a value in the range from 101% to 120%.

Known USB-C power adapters typically propose a single List, which may contain a Data Object (DO) with 5V x 3A = 15W as the first power value, and may propose a second DO with 9V x 3A = 27W as the second power, hence the ratio of the second power and the first power is 27/15=180%, which is much larger than 120%.

By advertising a second power (at 9V) which is higher than the first power (at 5V), many rechargeable devices will select the DO with the highest power, in the example the DO with 9V instead of the PDO with 5V, which results in reduced Joule losses (inter alia) in the cable, and is thus better for the environment.

In an embodiment, the third associated current value is smaller than 1.0A, e.g. at most 0.8A, or at most 0.6A, or at most 0.5A, or at most 0.4A.

In an embodiment, the power adapter device further comprises configuration means or selection means or mechanical manipulation means for allowing a user to configure the power adapter device to operate in the first mode of operation, or in the second mode of operation, or to change or toggle an initial mode or a previously selected mode of operation.

In an embodiment, the power adapter device further comprises a housing, and the configuration means or selection means can be manipulated by a user on the outside of the housing.

In an embodiment, the configuration means or selection means comprise a push-button having a pressed state (or "down state") corresponding to one of the first and second mode of operation, and a released state (or "up state") corresponding to the other of the first and second mode of operation, and detection means connected to the controller for detecting the position of the push button.

In an embodiment, the configuration means or selection means comprise a press-button having a pressed state and a released state, and detection means connected to the controller for detecting the position of the press-button; and wherein the controller is configured for changing between the first mode of operation and the second mode of operation each time the press-button is pressed or released.

In an embodiment, the configuration means or selection means comprise a rotary-knob having a first position corresponding to one of the first and second mode of operation, and a second position corresponding to the other of the first and second mode of operation, and detection means connected to the controller for detecting the position of the rotary knob.

In an embodiment, the configuration means or selection means comprise a slider having a first position corresponding to one of the first and second mode of operation, and a second position corresponding to the other of the first and second mode of operation, and detection means connected to the controller for detecting the position of the slider.

In an embodiment, the configuration means or selection means comprise a switch having a first condition corresponding to the first mode of operation, and having a second position corresponding to the second mode of operation, and detection means connected to the controller for detecting the position of the switch.

In an embodiment, the configuration means or selection means comprise a toggle switch connected to the controller, wherein the controller is configured for detecting if the toggle switch was toggled, and for changing the mode of operation upon such detection.

In an embodiment, the configuration means or selection means comprises a first sensor (e.g. a capacitive sensor, a pressure sensor, a magnetic sensor, etc.) for configuring the power adapter device in the first mode of operation, and comprises a second sensor (e.g. a capacitive sensor, a pressure sensor, a magnetic sensor, etc.) for configuring the power adapter device in the second mode of operation.

In an embodiment, the configuration means or selection means comprises a sensor (e.g. a capacitive sensor, a pressure sensor, a magnetic sensor, etc.) for changing the configuration (also known as "toggling") between the first mode of operation and the second mode of operation.

In an embodiment, the configuration means or selection means comprises an accelerometer or a shock sensor for switching the configuration of the power adapter device from the first mode of operation into the second mode of operation, or vice versa.

In an embodiment, the configuration means is a rotary knob having two positions labelled "max" and "25%", and the first list may comprise DO1a with (fixed 5V and 3.0 A) and DO1b with (fixed 9V and 2.0 A), and the second list may comprise DO2a with (fixed 5V and 0.75A) and DO2b with (fixed 9V and 0.5 A). If the rotary knob is rotated in the position labelled "max", the power adapter device is configured in the first mode of operation, and will provide (e.g. advertise) the first list of DOs with DO1a and DO1b. If the rotary knob is rotated in the position labelled "25%", the power adapter device is configured in the second mode of operation, and will provide (e.g. advertise) the second list of DOs with DO2a and DO2b. Another predefined percentage may of course also be used.

In an embodiment, the controller of the power adapter device is connected to data-lines (e.g. D) of the USB-C cable to communicate with a processor of the rechargeable device; and the rechargeable device comprises a software program (or software application, also known as "app") for allowing a user to select the first or second mode of operation; and the controller is configured for receiving the selected mode of operation, and for applying this mode of operation.

In an embodiment, the power adapter device further comprises one or more light emitting diodes (LED) and/or an LCD display connected to the controller for indicating whether the power adapter device is configured in the first or second mode of operation and/or for indicating the actual power delivered by the power adapter device.

The first mode or second mode may be indicated for example by driving the LED so as to blink at a relatively high frequency (e.g. about 2.0 Hz) when configured in the first mode of operation, and so as to blink at a relatively low frequency (e.g. about 1.0 Hz) when configured in the second mode of operation. The LED may be a bi-color LED, and the color green may e.g. be used to indicate the second mode, and the color red may be used to indicate the first mode. Other coding schemes are also envisioned.

In an embodiment, the first list consists of a first predefined number of Data Objects (e.g. PDO's) having predefined values, and wherein the second list consists of a second predefined number of Data Objects (e.g. PDO's) having predefined values.

The first list and the second list may be stored in a non-volatile memory (e.g. flash or eprom or eeprom) embedded in or connected to the controller of the power adapter device.

In an embodiment, the first list contains at least two Data Objects, one with a fixed supply voltage of 5V, and one with a fixed supply voltage of 9V; and the second list contains only one Data Object with a fixed supply voltage of 5V.

In an embodiment, the first list of source capabilities comprises at least one source DO each having a fixed supply voltage (e.g. one DO with 5V, and optionally a second DO with 9V, and optionally a third DO with 12V, and optionally a fourth DO with 15V, and optionally a fifth DO with 20V) and corresponding current values for allowing a first power value in the range from 31 to 60W, or in the range from 30 to 100W; and wherein the second list of source capabilities comprises at least one source DO each having a fixed supply voltage (e.g. one DO with 5V, and optionally a second DO with 9V, and optionally a third DO with 12V, and optionally a fourth DO with 15V, and optionally a fifth DO with 20V) and current values for allowing a second power value of at most 30W, or at most 25W, or at most 20W, or at most 15W.

Such a power adapter device may be ideally suited for charging devices having a battery with a capacity of about 2000 mAh to about 7000 mAh, such as e.g. a laptop.

In an embodiment, the first list of source capabilities has one or more source DO's specifying a fixed voltage value and a fixed current value for allowing the portable device to charge its battery with a first power of at least 8 W or at least 10W or at least 15W or at least 20W (e.g. a list with a single DO specifying 5V and 1.6A; or a list with two DO's including a first DO specifying 5V and 1.6 A, and a second DO specifying 9V and 1.0A), and wherein the second list of source capabilities has one or more source DO's specifying a fixed voltage value and a fixed current value for allowing the rechargeable device to charge its battery with a second power lower than the first power (e.g. a list with a single DO specifying 5V and 1.0A; or a list with two DO's including a first DO specifying 5V and 1.0 A, and a second DO specifying 9V and 0.5A; or a list with two DO's including a first DO specifying 5V and 0.8 A, and a second DO specifying 9V and 0.5A).

In an embodiment, the first list of source capabilities comprises at least one source DO with a fixed supply voltage of 5 Volt and a first predefined current value of at least 1.6 A; (i.e. at least 8.0 W)
and wherein the second list of source capabilities comprises at least one source DO with a fixed supply voltage of 5 Volt and a second predefined current value of at most 0.8 A. (i.e. at most 4.0 W)

In an embodiment, the power adapter device comprises a rotary-button being movable from a first position to a second position, or a slider being movable from a first position to a second position, and detection means connected to the controller for detecting the position of the rotary knob or of the slider; and the controller is configured for determining at least one current value dependent on the detected position (e.g. by means of a look-up table, or by calculations), and is further configured for providing the second list containing at least one DO having a fixed supply voltage and said at least one current value.

In this embodiment, the second list is not a predefined list, but the content of the list depends on the position of the rotary knob or slider. If the rotary knob and/or the slider have a limited number of discrete positions (e.g. 5 positions), the at least one current value may be determined using one or more look-up tables, e.g. a look-up table holding 5 values for the current to be advertised along with a fixed voltage of 5V, and optionally a second look-up table holding 5 values for the current to be advertised along with a fixed voltage of 9V. Alternatively, the at least one current value may be calculated using mathematical formulas. This can be used not only for a rotary knob or slider having discrete positions, but can also be used for a button or slider which are movable in a continuous manner from the first to the second position.

In an embodiment, the power adapter device has communication means to communicate data over the USB-bus; and the controller is configured to obtain information (e.g. device ID, manufacturer ID, hardware ID, etc.) about the rechargeable device using USB enumeration; and the controller is further configured to provide at least one or both of the first list of source capabilities and the second list of source capabilities based on the obtained information.

In an embodiment, the power adapter device as multiple predefined candidate lists of DO's, and one of these predefined candidate lists of DO's is selected as "the" second list of source capabilities, depending on the information obtained from the USB enumeration.

In an embodiment, the second list of source capabilities will or will not contain a DO with a fixed supply voltage of 20V, depending on the information obtained from the USB enumeration.

In an embodiment, the second list of source capabilities has a predefined number of DO's with fixed supply voltages, but the associated maximum current values for each of these fixed supply voltages will be determined (e.g. selected) depending on the information obtained from the USB enumeration.

In an embodiment, if a phone or a smartphone is detected, the second list of source capabilities is chosen so as to limit the output power to a value in the range from 5W to 10W, and if a laptop is detected, the second list of source capabilities is chosen so as to limit the output power to a value in the range from 20W to 30W.

In an embodiment, the power adapter device further comprises means (e.g. current measurement means, e.g. comprising a shunt resistor or a magnetic sensor) for determining (e.g. measuring or estimating) an output current provided on the VBUS lines; wherein the power adapter device, when configured in the second mode of operation, first advertises the first list of DOs, and allows the portable device to charge its battery during a first period of time in accordance with this first list, while measuring the amount of current drawn by the rechargeable device, and to determine a first power value; and wherein the power adapter device subsequently advertises at least once reduced source capabilities by providing the second list of one or more DOs containing a fixed supply voltage value and an associated current value together defining a second power value smaller than the first power value, for example determined as a predefined fraction of the first power value.

The predefined fraction may be a percentage value in the range from 20% to 75%, e.g. equal to about 20%, or equal to about 25%, or equal to about 30%, or equal to about 35%, or equal to about 40%, or equal to about 45%, or equal to about 50%, or equal to about 55%, or equal to about 60%, or equal to about 65%, or equal to about 70%, or equal to about 75%.

In an example, the power adapter provides a first list with the following DO's: {(5V,3A), (9V,3A), (15V, 3A), (20V,3A)}, and the agreed-upon voltage is 20V and the measured current is 2.5A, thus drawing 50W. The power adapter device may be configured to allow at most 60% of this power (i.e. 30W) to be delivered when in the second mode, and in order to do so, may advertise for example one of the following lists as a second list: {(5V,3A), (9V,3A), (15V, 2.0A), (20V,1.5A)} or {(5V,3A), (9V,3A), (15V, 1.9A), (20V,1.5A)}. The latter list has the advantage that it will cause many rechargable devices to select the DO with the maximum power, in this case (20V, 1.5A) and not (15V,2.0A), resulting in less Joule losses in the cable, and thus provides a more power efficient solution.

In an embodiment, the controller further comprises a timer and current measurement means; and wherein the power adapter device, when configured in the second mode of operation, first advertises the first list of DOs ("e.g. fast charge mode"), and allows the rechargeable device to charge its battery during a first period of time in accordance with this first list, while measuring the amount of current drawn by the rechargeable device, and to determine a first power value; and wherein the power adapter device subsequently advertises alternatingly reduced source capabilities and increased source capabilities, by providing the second list of one or more DOs containing a fixed supply voltage value and an associated current value together defining a second power value smaller than the first power value that is allowed to be supplied during a second time duration, and by providing another second list of one or more DOs containing a fixed supply voltage value and an associated current value together defining a third power value in the range from the second power value to the first power value that is allowed to be supplied during a third time duration.

The second and third time periods may be repeated at least once, or at least twice, or until the rechargeable device is fully charged, etc.

**In** an embodiment, the power adapter device further comprises a rotary button or a slider for allowing a user to influence the relative duration of the second time periods and the third time periods, e.g. to influence a "ratio of the second time duration and third time durations".

**In** an embodiment, the controller further comprises current measurement means; and wherein the power adapter device is further configured, when operating in the second mode, for disconnecting the output node of the electrical circuit from the VBUS of the USB-C connector to stop charging, if it is detected that the measured current is below a threshold value.

**In** an embodiment, the threshold value is a predefined current value.

**In** another embodiment, the threshold value is dynamically calculated as a predefined percentage of a current previously measured during the same charging cycle, (i.e. since the last connection with a charger). The predefined percentage may be a value in the range from 10% to 40%, e.g. equal to about 35%, or equal to about 30% or equal to about 25%, or equal to about 20%, or equal to about 15%, or equal to about 10%.

The purpose of this embodiment is to prolong the battery lifetime by shortening the second phase of the battery charging, known as "constant voltage phase".

**In** an embodiment, the power adapter device is further adapted for receiving a temperature value indicative of a temperature (e.g. a battery temperature) of the rechargeable device and/or further comprises a temperature sensor communicatively connected to the controller of the power adapter device, for measuring a temperature value indicative of a temperature (e.g. of the casing) of the rechargeable device; and wherein the power adapter device, when configured in the second mode of operation, is further configured for adjusting an amount of output power that can be delivered to the rechargeable device as a function of the measured temperature, by updating (e.g. repeatedly updating) one or more current values of at least one DO of the second list, and/or by removing DOs from the list (e.g. when the measured temperature is larger than a first threshold value), and/or by adding DOs to the list (e.g. when the measured temperature is smaller than a second threshold value); and to inform the rechargeable device of these updated source capabilities, (e.g. by advertising this updated second list); and to adjust the electrical circuit correspondingly, if needed. (e.g. if the power adapter device and the rechargeable device agree upon another voltage, after the negotiation).

For example, an app running on the rechargeable device may communicate an internal temperature of the rechargeable device to the power adapter.

In an embodiment, the power adapter device further comprises a USB-C compatible cable portion having a first end (proximal to the power adapter device) operatively connected to the electrical circuit, and having a second end (distal to the power adapter device) comprising said USB-C connector connectable to the USB-C port of said rechargeable device.

The power adapter may have a housing, and the cable portion may be fixedly connected to the housing. The first end may be located inside the housing, and may not be visible from the outside of the housing.

In an embodiment, the USB-C compatible cable portion further comprises a temperature sensor located at the second cable end, and communicatively connected to the controller of the power adapter device; and the power adapter device, when configured in the second mode of operation, is further configured for adjusting an amount of output power that can be delivered to the rechargeable device as a function of the measured temperature.

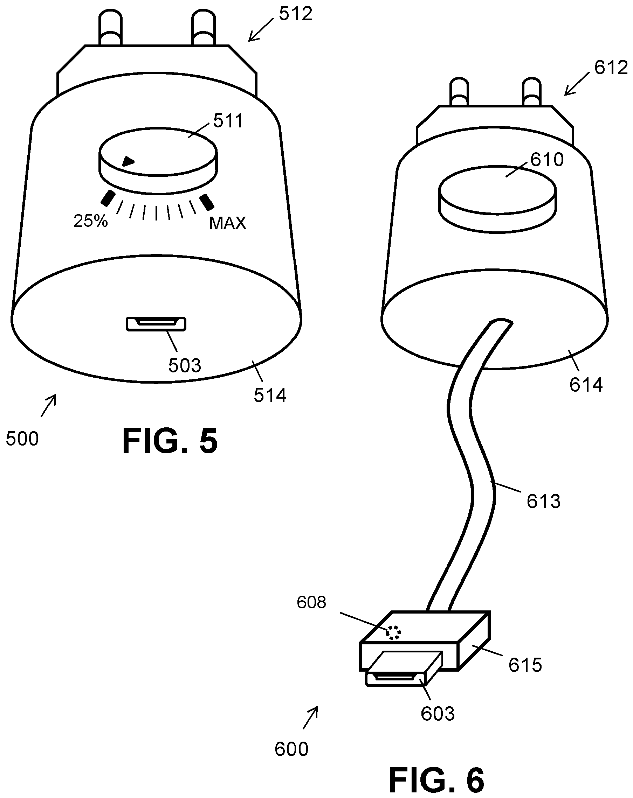

An example of such a power adapter device is illustrated in FIG. 6.

In an embodiment, a temperature is measured when the rechargeable device is being connected, or when recharging starts, is considered as a reference temperature, and subsequent temperature measurements are considered due to heating of the device due to the charging of the battery, and the controller may be configured to allow the temperature to increase only a certain amount above the reference temperature.

In an embodiment, the power adapter device is configured to periodically check the temperature, e.g. once every 10 seconds, or once every 20 seconds, and to compare the measured temperature with a predefined threshold, and if the measured temperature is larger than the predefined threshold (e.g. a first threshold value), to reduce the one or more current values of the fixed voltage DOs (e.g. until a predefined minimum value is reached, without going below this minimum value) in order to reduce the amount of power delivered to the rechargeable device.

Optionally, the power adapter device is further configured to test if the measured temperature is smaller than a predefined threshold (e.g. a second predefined threshold different from the first predefined threshold), and if an outcome of this test is true, to increase the one or more current values in the fixed voltage DOs in order to increase the amount of power delivered to the rechargeable device (e.g. until a predefined maximum value is reached).

In an embodiment, the one or more current values of the second list are dynamically adjusted with the aim of keeping the measured temperature within a predefined temperature range.

The minimum and/or maximum current value or power value may be predefined values (e.g. hardcoded, or stored in flash), and may be independent of the kind (e.g. laptop or smartphone or tablet) or type or brand of the rechargeable device. Alternatively, the power adapter device is further configured to retrieve information from and/or about the rechargeable device regarding one or more of its kind or type or brand or maximum power consumption, e.g. extracted or derived from enumeration information obtained via the CC-lines of the communication between the power adapter device and the USB-C port of the rechargeable device.

In an embodiment, the power adapter device and/or the USB-C compatible cable portion have a second temperature sensor, (e.g. situated at a non-zero distance from the second cable end) for measuring or estimating a temperature ambient to the rechargeable device; and the controller of the charging device is further configured to dynamically adjust the one or more current values of one or more DO's of the second list in order to keep a temperature difference between the temperature measured at the second cable end (indicative of the temperature of the phone), and the temperature measured by the second temperature sensor (indicative of the environmental temperature) below a predefined threshold. (e.g. below 10°C, or below 7°C, or below 5°C).

In an embodiment, the input port comprises a plurality of input terminals for connection to a mains power supply (e.g. to a 110V electricity net, or to a 220V electricity net); and the electrical circuit further comprises an AC to DC circuit configured for receiving an AC power and providing a DC power. (e.g. at a local voltage of 20V DC, or 15V DC ,or 12V DC, or 9V DC, or 5V DC).

Such an input port may be a "mains connector plug", and the power adapter device may be referred to as a "wall plug device".

In an embodiment, the input port is or comprises a female connector (e.g. a USB-A connector, or a USB-C connector) for receiving DC power.

It is an advantage that the electrical circuit of this power adapter circuit can be extremely simple, e.g. does not comprise a voltage regulator, an AC-to-DC circuit or a DC-to-DC circuit. The power adapter may comprise one or two controllers configured to obtain source capabilities from the external power supply, and to negotiate with a processor of the rechargeable device to find a match, and if a match is found, to close said at least one switch, and if no match is found, to disable said at least one switch.

This power adapter device preferably has a "selection means or configuration means" (e.g. of the type described above: a button or knob or slider or the like) to allow a user to limit the amount of output power that will be delivered to the rechargeable device, irrespective of the maximum power that can be delivered by the external power source (e.g. a battery pack).

In an embodiment, the input port is a second USB-C connector; and the controller is further configured for communicating also with the external power source via the second USB-C connector.

In this embodiment, the controller would be communicatively connected with both the first USB-C connector as well as the second USB-C connector.

In an embodiment, the input port is a second USB-C connector; and the power adapter device further comprises a second controller for communicating with the external power source via the second USB-C connector.

In this embodiment, the power adapter device can act as "a smart interface" between the external power source and the rechargeable device, "smart" in the sense that it can communicate and negotiate with both sides, but can impose additional restrictions, e.g. to impose "slow charging".

In an embodiment, the controller of the power adapter device is connected to both USB-C connectors (the one at the input side, and the one at the output side).

In another embodiment, the power adapter device has two controllers: one connected to the USB-C connector at the input side, and one connected to the USB-C connector at the output side, and these controller devices would be communicatively interconnected.

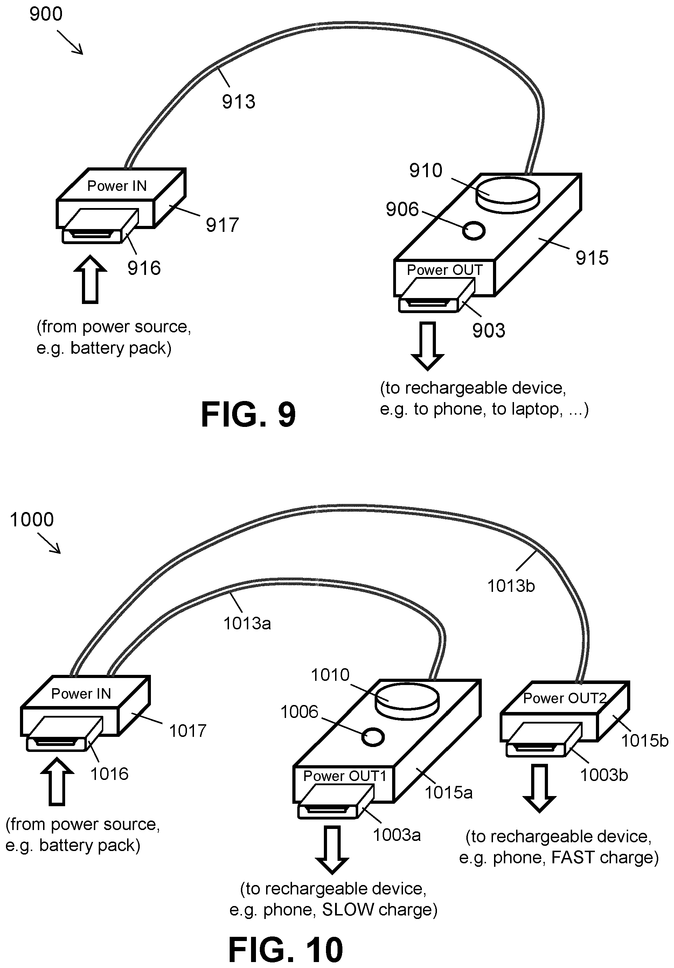

In an embodiment, the electrical circuit and the controller are incorporated in the first USB-C connector or in the second USB-C connector, e.g. as illustrated in FIG. 9.

It is an advantage of this embodiment that it can be extremely compact, because there is no need for AC/DC or DC/DC conversion. In some embodiments, it only requires digital communication (e.g. in accordance with the USB-C protocol) with the external energy source and communication with the rechargeable device, and still functions as a power limiting device. It could be referred to as a "smart cable".

In an embodiment, the power adapter device is further configured to detect if the first USB-C connector is connected to the rechargeable device and if the second USB-C connector is connected to the external power source or vice versa; and has provisions (e.g. a plurality of power switches) to selectively route the power signals coming from the second USB-C connector to the input node of the electrical circuit, and route the output node of the electrical circuit to the power signals of the first USB-C connector, or vice versa.

To this end, the power adapter may comprise: a first power switch for selectively connecting or disconnecting the VBUS pins of the first USB-C connector and the input node of the electrical circuit, and a second power switch for selectively connecting or disconnecting the VBUS pins of the second USB-C connector and the input node of the electrical circuit, and a third power switch for selectively connecting or disconnecting the VBUS pins of the first USB-C connector and the output node of the electrical circuit, and a fourth power switch for selectively connecting or disconnecting the VBUS pins of the second USB-C connector and the output node of the electrical circuit.

In an embodiment, the power adapter device further comprises second selection means (e.g. a switch, a rotary button, a push button, a slider) for allowing a user to choose which of the USB-C connectors should act as a power source, and which of the USB-C connectors should act as a power sink.

In an embodiment, the power adapter device is incorporated in a housing, and comprises a first USB-C cable portion having a first (e.g. male) USB-C connector for connection with an external power source; and comprises a second USB-C cable portion having a second (e.g. male) USB-C connector for connection with the USB-C port of the rechargeable device.

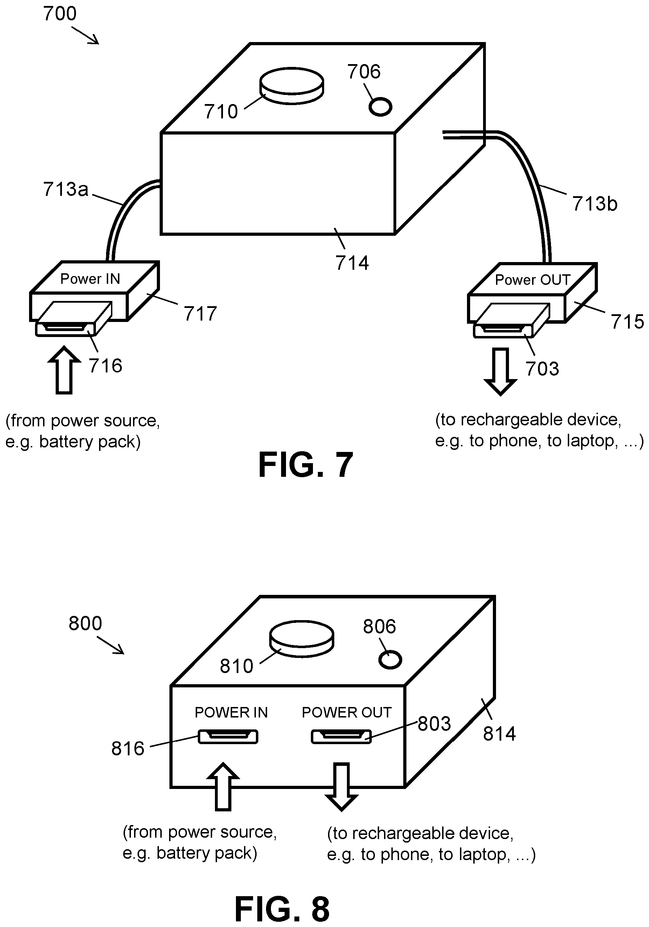

In an embodiment, the electrical circuit and the controller may be accommodated in a housing located between the first USB-C connector and the second USB-C connector, e.g. as illustrated in FIG. 7.

The power adapter device may be integrated or accommodated or build-in in the plug portion of the cable. Or stated in other words, typically the connectors at both ends of the cable are partially surrounded with a plastic material, which plastic material may completely encapsulate the electrical circuit and the controller.

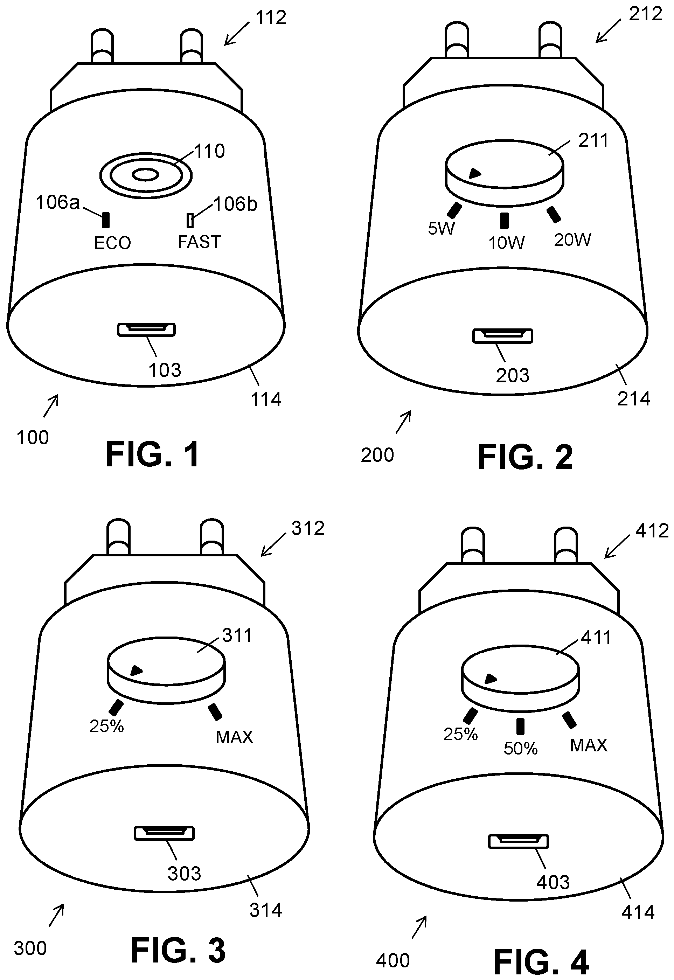

In an embodiment, the USB-C connector (for providing the output power) is a female USB-C connector. Examples of such embodiments are shown in FIG. 1 to FIG. 5, FIG. 8, and FIG. 12 to FIG. 13.

In an embodiment, the controller further comprises a timer; and the controller is further configured for determining a first time when a USB-C cable is connected or disconnected from the USB-C connector or from the USB-C port, and for determining a second time when the USB-C cable is disconnected or reconnected to the USB-C connector or to the USB-C port, and for determining a time difference between the first time and the second time; and the controller is further configured for selecting or changing a mode of operation based on the measured time period.

For example: if the cable is plugged (without being unplugged), the power adapter device will assume that the user wants the first mode, i.e. the "fast charge mode". If the cable is then disconnected and reconnected, the time difference between these events is used to select or to change (i.e. toggle) the mode of operation. For example, if the time difference is smaller than a predefined threshold, the first configuration (also referred to herein as "fast charging mode") is selected; if the time difference is larger than said threshold, the second configuration (also referred to herein as "slow charging mode") is selected.

It is noted that the power adapter is capable of detecting not only a disconnection and reconnection of the USB-C cable at the proximal end of the cable (at the interface between the power adapter device and the USB-C cable), but is also capable of detection a disconnection and reconnection of the USB-C cable at the distal end of the cable (at the interface between the USB-C cable and the rechargeable device).

In an embodiment, the controller further comprises a timer; and the controller is further configured for determining a first time when a USB-C cable is disconnected from the USB-C connector, and for determining a second time when the USB-C cable is reconnected to the USB-C connector, and for determining a time difference between the first time and the second time; and wherein the controller is further configured for adjusting at least one current value of at least one Data Object of the second list depending on the measured time period.

For example: to increase the at least one current value each time the connector is disconnected and reconnected within 2.0 seconds.

In an embodiment, the controller further comprises a timer; and the controller is further configured for detecting when a USB-C cable is being connected to the USB-C connector, and for determining a first orientation of the USB-C cable at the power adapter side; and wherein the controller is further configured for determining a first time when a USB-C cable is disconnected from the USB-C connector, and for determining a second time when the USB-C cable is reconnected to the USB-C connector, and for determining a second orientation of the USB-C cable at the power adapter side, and for determining a time difference between the first time and the second time; and wherein the controller is further configured for selecting or changing a mode of operation based on the measured time period and based on whether the first and the second orientation are equal or different.

In an embodiment, the mode of operation of the power adapter device is changed (or toggled) if the cable is unplugged and turned and replugged within a predefined time period (e.g. within 3 seconds). The previous state could be stored in EEPROM.

Preferably the power adapter device has a least one LED to show the actual mode of the device, for allowing a user to check the charging mode, and if desired to change the mode.

In an embodiment, the electrical circuit comprises at least one switch for selectively connecting the input node and the output node for allowing a voltage applied to the input port to appear on the USB-C connector, and selectively disconnecting the input node and the output node; and wherein the power adapter device further comprise a button that can be manipulated by a user; and wherein the power adapter device is configured to emulate a disconnection of the USB-C connector when the button is asserted.

In an embodiment, the controller is further configured for detecting when a USB-C cable is being connected to the USB-C connector, and for detecting an orientation of the USB-C cable at the power adapter side; and wherein the power adapter device is further configured for selecting the first mode of operation when a first predefined orientation is detected, and for selecting the second mode of operation when a second predefined orientation is detected.

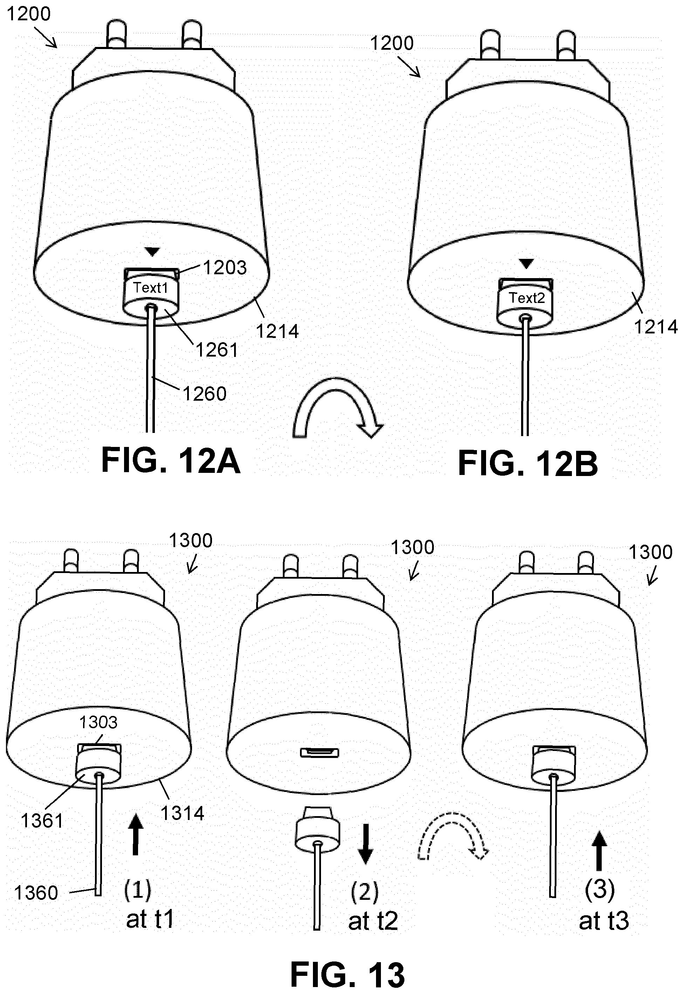

Preferably in this case, one or both of the power adapter device and/or the USB-C cable may have a visible marking (e.g. a graphic, or a text), e.g. the triangle and the Text shown in FIG. 12.

According to a second aspect, the present invention also provides a kit of parts, or an assembly comprising: a power adapter device according to the first aspect; and a USB-C cable.

In an embodiment, the USB-C cable comprises at least one of: a temperature sensor; a visible or tactile marking indicating a first or a second orientation; disconnection means (e.g. a switch) to mimic a physical disconnection or reconnection.

According to a third aspect, the present invention also provides a kit of parts, or an assembly comprising: a power adapter device according to the first aspect; and a rechargeable device having a USB-C port and a rechargeable battery.

In an embodiment, the battery of the rechargeable device has a battery capacity C; and the first list of DOs is configured for allowing the rechargeable device to charge the battery during a first phase (known as "constant current phase") wherein the power management unit applies a first fixed current to the battery having an amplitude (expressed in A) of at least 0.9 times the battery capacity C (expressed in Ah); and the second list of DOs is configured for allowing the rechargeable device to charge the battery during said first phase wherein the power management unit applies a second fixed current to the battery having an amplitude of at most 0.7 times the battery capacity C, or at most 0.6 times, or at most 0.5 times, or at most 0.4 times, or at most 0.3 times, or at most 0.2 times.

Lithium-ion batteries are typically charged with a current referred to as 1C, meaning a current having a value (in Amperes) equal to 1.0 times the battery capacity value (expressed in Ampere-hours). For example, a Lithium-ion battery of 2000 mAh = 2Ah can be charged with a current of 2A (during the constant current phase).

Certain Lithium-Polymer batteries, however, can be charged with a current of 1.5 C to 2C, meaning a current having a value (in Amperes) up to 2.0 times the battery capacity value (expressed in Ampere-hours). As an example, such a Lithium-Polymer battery having a capacity of 3 Ah can be charged with a current of up to 6A. When using such a high current, obviously the time required to charge the battery is reduced.

According to a fourth aspect, the present invention also provides a power adapter device for charging a rechargeable device (e.g. a portable device) having a (e.g. female) USB-C port and a processor for communicating over the USB-C port and a power management unit connected to a rechargeable battery; the power adapter device comprising: an input port (e.g. comprising input terminals or an input connector) for receiving input power from an external power source (e.g. from a mains supply, from a battery pack, from a solar panel, from a laptop, etc.); a USB-C connector connectable (directly or indirectly, e.g. via a USB-C cable) to said USB-C port of said rechargeable device for providing output power; an electrical circuit (e.g. a power converter circuit or a voltage converter circuit) having an input node connected to said input port for receiving said input power, and having an output node connected to said USB-C connector (e.g. to the VBUS pins thereof) for providing said output power (e.g. at a predefined voltage level or at a configurable voltage level); a controller connected to the USB-C connector and configured for communicating with the processor of the rechargeable device in accordance with a predefined protocol to inform the rechargeable device of source capabilities the power adapter device is capable to deliver, by providing a list of Data Objects (or "data records" or "data structures") comprising at least one Data Object with a first (e.g. fixed) supply voltage value and an associated first current value; wherein the power adapter device further comprises at least one temperature sensor communicatively connected to the controller of the power adapter device; and wherein the controller is further configured for performing one or more of the following steps at least once or repeatedly: a) obtaining a temperature from the temperature sensor; b) adjusting at least one current value of at least one DO of the list of Data Objects as a function of the measured temperature; c) to inform the rechargeable device of updated source capabilities by providing the updated list of Data Objects.

In an embodiment, step a) may further comprise comparing the obtained temperature with a threshold value, and if the obtained temperature is higher than the threshold value, to perform step b) and step c), otherwise to skip step b) and step c).

This temperature sensor may be situated very close to from the USB-C connector (e.g. at a distance smaller than 10 mm to measure a temperature indicative of the temperature of the USB-C port of the rechargeable device, when connected thereto). This temperature sensor may be incorporated in a USB-C compatible cable portion which may be part of, or connectable to the power adapter device.

In an embodiment, the power adapter device further comprises a second temperature sensor (e.g. situated at a distance of at least 5 mm from the first temperature sensor) for measuring or estimating a temperature ambient to the rechargeable device; and the controller of the power adapter device is further configured for performing one or more of the following steps at least once or repeatedly: a) obtaining a first temperature from the first temperature sensor (e.g. indicative of a temperature of a phone), and a second temperature from the second temperature sensor (e.g. indicative of the ambient temperature); b) calculating a temperature difference between the first and the second temperature; c) adjusting at least one current value of at least one DO of the list of Data Objects as a function of the temperature difference; d) to inform the rechargeable device of updated source capabilities by providing the updated list of Data Objects.

Step c) may comprise: adjusting the at least one current value in order to keep the temperature difference below a predefined threshold (e.g. below 10°C, or below 7°C, or below 5°C).

Step c) may comprise: reducing the at least one current value if the temperature difference increases over time or increases above a first temperature threshold; and/or may comprise: increasing the at least one current value if the temperature difference decreases over time or decreases below a second temperature threshold.

In an embodiment, the protocol is compatible with the USB Power Delivery specification (e.g. version 2.0 or higher).

In an embodiment, the power adapter device further comprises one or more Light Emitting Diodes (LEDs).

In an embodiment, the controller is configured to obtain information (e.g. device ID, manufacturer ID, hardware ID, etc.) about the rechargeable device using USB enumeration, and to adjust the list of Data Objects accordingly; (e.g. the maximum current or the maximum allowed temperature may depend on the device ID, hardware ID, etc.).

In an embodiment, the controller is configured to repeatedly (e.g. periodically) alter its source capabilities by alternatingly providing said list of DOs defining a first power value that is allowed to be supplied during a first time duration, and then providing another list of DOs defining a second power value smaller than the first power value that that is allowed to be supplied during a second time duration.

In an embodiment, the temperature sensor is located in a USB-C cable portion or in the USB-C connector.

In an embodiment, the power adapter device further comprises a second temperature sensor for measuring or estimating a temperature ambient to the rechargeable device; and wherein the controller of the charging device is further configured to dynamically adjust the one or more current values of one or more DO's to keep a temperature difference between the first and second temperature sensor below a predefined threshold.

Particular and preferred aspects of the invention are set out in the accompanying independent and dependent claims. Features from the dependent claims may be combined with features of the independent claims and with features of other dependent claims as appropriate and not merely as explicitly set out in the claims. These and other aspects of the invention will be apparent from and elucidated with reference to the embodiment(s) described hereinafter.

**Brief description of the drawings**

**FIG. 1 to FIG. 11** show illustrative examples of power adapter devices proposed by the present invention.

**FIG. 12A and FIG. 12B** illustrate a technique of detecting a user preference (or user input), as can be used in embodiments of the present invention.

**FIG. 13** illustrates another technique of detecting a user preference, as can be used in embodiments of the present invention.

**FIG. 14** shows a picture of a test-board that was used to test certain functions and features described in this application. Details of the electronics are not shown in FIG. 14, but see FIG. 16.

**FIG. 15** shows measurement results of the test-setup illustrated in FIG. 14.

**FIG. 16** shows a high-level block-diagram of an embodiment of a power adapter proposed by the present invention, connected to a smartphone via a USB-C cable.

**FIG. 17A** shows a thermal picture of a smartphone after being charged using a power adapter proposed by the present invention, configured in a first mode (fast charging mode), and

**FIG. 17B** shows a thermal picture of the same smartphone after being charged using the same power adapter but configured in a second mode (slow charging mode).

**FIG. 18A** and **FIG. 18B** show a graph showing the charging voltage and charging current measured using the power adapter of FIG. 14 and the smartphone of FIG. 17A and FIG. 17B.

**FIG. 19 to FIG. 23** show high-level block-diagrams of illustrative examples of a power adapter according to embodiments of the present invention, connected to a rechargeable device.

The drawings are only schematic and are non-limiting. In the drawings, the size of some of the elements may be exaggerated and not drawn on scale for illustrative purposes. Any reference signs in the claims shall not be construed as limiting the scope. In the different drawings, same or similar reference signs may refer to same or analogous elements.

**Detailed description of illustrative embodiments**

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

In this document, Data Objects or data records or data structures containing information about source capabilities are referred to as DO's. When using the syntax of the Power Delivery Specification, these DO's are referred to as Power Data Objects or PDO's.

In this document, the expression "first mode" or "first configuration mode" or "first mode of operation" mean the same.

Likewise, the expression "second mode" or "second configuration mode" or "second mode of operation" mean the same.

In this document, a "Lightning port" refers to a power connector, created and designed by Apple Inc. It was introduced on September 12, 2012, in conjunction with the iPhone 5. More information can be found (inter alia) on https://en.wikipedia.org/wiki/Lightning_(connector).

The symbol $\approx$ as used herein means "is approximately equal to", or "is equal to about".

The present invention relates to power adapter devices for charging rechargeable devices (such as e.g. a smartphone or a laptop) comprising a USB-C port, and a processor for communicating over the USB-C port, and a power management unit connected to a rechargeable battery.

The battery may e.g. be a lithium-ion battery, or a lithium polymer battery. Such a battery is typically charged in two phases: a first phase known as a "constant current phase" followed by a second phase known as a "constant voltage phase". Rechargeable devices such as smart phones, tablets, laptop computers, drones, e-bikes, e-scooter, e-cigarettes etc. with a built in battery have circuitry and algorithms to charge the battery while taking care of the specifics of each battery, the specifics of which a user or a charger device in principle does not have access to, and cannot influence. A charger is only adapted to make sure it provides sufficient power at the right voltage, and the controller inside the rechargeable device takes care of the rest.

As the processing power and/or the screen resolution of rechargeable devices has continuously increased over the last 25 years (and more), so has the battery capacity, and hence the amount of power to charge such a battery. Certain types of nowadays batteries (anno 2023) used in smartphones may be charged with currents of 3 Amps or even up to 6 Amps, in order to charge the smartphone in a reasonable time period.

Whereas batteries were mostly replaceable in portable mobile phones produced before the year 2000, batteries of contemporary devices are often built-in and , or are difficult and/or costly to replace. As a consequence, when a battery has degraded over time, e.g. due to frequent recharging, the device with the built-in battery (or at least the battery itself) needs to be replaced, and the user needs to purchase a new one. While this may be commercially advantageous, the environmental impact in terms of energy and resources should be considered as well. Today, there is little an environmentally aware person can do about this. On the contrary, with each new model of rechargeable device, typically also a new charger is offered for sale or needs to be purchased,.

The inventors of the present invention want to change this situation, and realised that the total energy consumed and the total carbon footprint generated by a typical smartphone during a typical lifetime is important, but still less than the total energy required to produce such a smartphone and the battery. In 2022, it can be estimated that the overall energy required yearly for manufacturing modern smartphones amounts to hundreds of TWh, which is equivalent to the annual energy production of dozens of nuclear power plants. Hence, if it would be possible to make a charger device or power adapter device that, when used, would prolong the lifetime of the battery, and thus of the rechargeable device that contains such a battery, would have a positive environmental impact, considering the vast number of rechargeable devices being used. This is one of the underlying motives of the present invention.

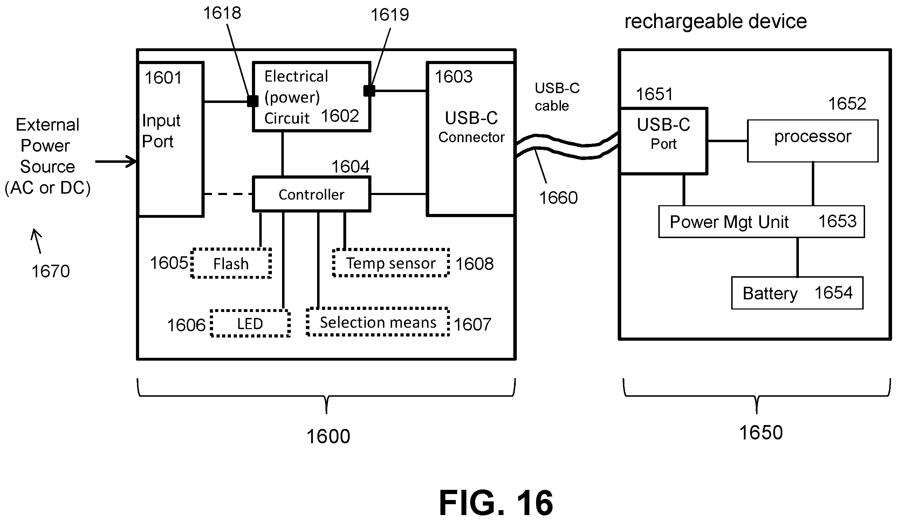

The present invention provides a power adapter device 1600 (see e.g. FIG. 16) for charging a rechargeable device 1650 (e.g. a portable device such as a phone, a smartphone, a tablet, a laptop computer) having a (e.g. female) USB-C port (or a Lightning port) 1651 and a processor 1652 for communicating over the USB-C port and a power management unit 1653 connected to a rechargeable battery 1654. The power adapter device 1600 comprises: an input port 1601 (e.g. comprising input terminals or an input connector) for receiving input power from an external power source 1670 (e.g. from a mains supply, from a battery pack, from a solar panel, from a laptop computer, etc.); a USB-C connector 1603 connectable (directly or indirectly, e.g. via a USB-C cable 1660) to said USB-C port 1651 of said rechargeable device 1650 for providing output power; an electrical circuit 1602 (also referred to herein as "electrical power circuit or "power converter circuit") having an input node 1618 connected to said input port 1601 for receiving said input power, and having an output node 1619 connected to said USB-C connector 1603 (e.g. to a VBUS pins thereof) for providing said output power (e.g. at a predefined voltage level or at a configurable voltage level); a controller 1604 connected to the USB-C connector 1603 and configured for communicating with the processor 1652 of the portable device 1650 in accordance with a predefined protocol (e.g. to exchange information about power profile and/or about source capabilities of the power adapter device); wherein the power adapter device 1600 has a first mode of operation wherein the controller 1604 is configured to inform the rechargeable device 1650 of first source capabilities the power adapter device 1600 is capable to deliver, by providing a first list of Data Objects (or "data records" or "data structures", referred to herein as DO's) comprising at least one Data Object with a first (e.g. fixed) supply voltage value and an associated first current value; and wherein the power adapter device 1600 is configurable (e.g. by a user) in a second mode of operation to inform the rechargeable device 1650 at least once of second source capabilities that includes at least one capability with said first (e.g. fixed) supply voltage and an associated second current value smaller than the first current value, and to configure the electrical circuit 1602 accordingly.

In some embodiments, the power adapter device 1600 may also comprise a USB-C cable portion 1600 (see e.g. FIG. 6), or may include a second USB-C connector 716 (see e.g. FIG. 7).

The power adapter device may be configured in the first or the second mode of operation in various manners, e.g. using "selection means" such as a push button, a rotary button, a slider, etc., or by detecting a particular way of disconnecting and reconnecting the USB-C cable (e.g. as will be illustrated in FIG. 12A to FIG. 13), or in other suitable manners.

For ease of understanding, in most embodiments described herein, the "first mode" may be understood as a "fast charging mode" or "high power mode", and the "second list" may be understood as "a reduced power mode" or "eco charging mode".

The protocol may be compatible with the USB Power Delivery specification, e.g. version 2.0 or higher, in which case the Data Objects are referred to as Power Data Objects (or PDO's) according to the USB Power Delivery specification. It is pointed out, however, that the present invention is not limited hereto, and also works if a proprietary protocol is used. The processor 1652 may be informed by the power adapter device 1600 of its source capabilities via the CC lines of the USB-C connector 1603.

The controller 1604 of the power adapter 1600 and the processor 1652 of the rechargeable device 1650 may be configured to perform a negotiation over the CC lines of the USB-C connector 1603, and the controller 1604 of the power adapter 1600 may be configured to control the electrical circuit 1602 based on an outcome of the negotiation (for example, if an agreement is reached to use another fixed voltage level, the controller may configure the electrical circuit 1602 accordingly.

The controller 1604 of the power adapter device 1600 may be configured to, when the power adapter device is operating in the second mode of operation, to inform the processor 1652 at least once (or repeatedly) of said second source capabilities by providing (e.g. advertising) a second list of Data-Objects (or "data records", e.g. PDO's) comprising at least one Data Object with said first (e.g. fixed) supply voltage value and said associated second current value.

The first list of DO's may have a predefined number of DO's, and the values of these DO's may be predefined. In some embodiments, the second list of DO's may also have a predefined number of DO's, and the values of these DO's may also be predefined, but that is not absolutely required, and in some embodiments the number and/or the values of DO's of the second list may be varied, e.g. dependent on a position of a rotary button or a slider.

**FIG. 1 to FIG. 11** show illustrative examples of power adapter devices proposed by the present invention.

**FIG. 1** shows a 3D perspective view of a power adapter device 100 having a housing 114 comprising an input port 112 in the form of an "AC wall plug" or a "mains connector plug" for connection to a mains supply (e.g. 220V at 50 Hz or 110V at 60 Hz). Such a power adapter device may be referred to as a "wall plug device". The power adapter device 100 has a USB-C connector 103 for providing power to a rechargeable device. The electronics inside the power adapter 100, between the input port 112 and the USB-C connector 103 is not visible in FIG. 1, but was already partially described above (referring to FIG. 16), and will be described in more detail further (e.g. FIG. 16 and FIG. 19 to FIG. 23).

As can be seen, the power adapter device 100 of FIG. 1 further comprises two Light Emitting Diodes (LEDs) 106a, 106b. The LEDs may be single-color LEDs or multi-color LEDs. These may be used for example for indicating whether the power adapter device is configured and/or operating in the "first mode" (also referred to herein as "fast charging mode") or in the "second mode" (also referred to herein as "reduced power mode" or "eco mode"). But LEDs are not absolutely required for the invention to work, and other embodiments may comprise a single LED, or no LED at all.

The device 100 of FIG. 1 further comprises a button 110, e.g. a "push button" (e.g. of the type that is either pressed or released), but other buttons may also be used, e.g. a "touch-button" (e.g. of the type that moves back to its original position after being released), or does not move at all (e.g. like a touch-panel of a laptop computer). The button 110 is an example of a "selection means" for allowing a user to set the mode of operation (e.g. pressed is eco-mode; released is fast-charging mode), or to change or switch or toggle the mode of operation each time the button is touched.

In an embodiment, the power adapter 100 of FIG. 1 may use a first predefined list of source capabilities when configured in the first mode (e.g. fast mode), and may use a second predefined list of source capabilities when configured in the second mode (e.g. eco mode).

EXAMPLE-1:

As an example, in a particular implementation the power adapter 100 may be compliant with the USB-C Power Delivery specification, and may advertise a first list containing the four "fixed voltage" PDO's:

List1 = {PDO1, PDO2, PDO3, PDO4}

PDO1 (5V, 3A), i.e. 15 W
PDO2 (9V, 3A), i.e. 27 W
PDO3 (15V, 3A), i.e. 30 W
PDO4 (20V, 3A), i.e. 60 W

When connected to for example a smartphone, the controller 1604 of the power adapter 1600 will advertise this first list to indicate which power it can be deliver, and a communication or negotiation takes place between the controller 1604 of the power adapter and the processor 1652 of the smartphone. The processor 1652 may indicate for example that it wants to use PDO2, and the power adapter 1600 would then configure or control the electrical circuit 1602 (e.g. a voltage regulator thereof) to generate a 9V signal, and to apply this voltage signal on the VBUS of the USB-C connector 1603, in accordance with the USB-C Power Delivery specification.

When using a classical charger that provides this exact same list of PDO's, the user cannot influence the charging process other than starting and stopping. But in an embodiment of the present invention, the power adapter 100 of FIG. 1 is configurable in a second mode of operation, wherein the power adapter provides a second list of source capabilities with reduced power values, for example:

List2 = {PDO1}

PDO1 (5V, 1A), i.e. 5 W

When the second list of source capabilities is advertised to the rechargeable device (e.g. to the same smartphone described above), the smartphone will select PDO1, and the power management unit 1653 will typically be configured (e.g. by the processor 1652) to not draw more than 1A. It is noted in this respect that the block-diagram of the rechargeable device 1650 of FIG. 16 is only an example, and other circuits may be used. Typically, the rechargeable device 1650 will have an "input control loop" to limit the maximum current that is drawn, and "a battery control loop" to control the voltage and current applied to the internal battery 1654.

A major advantage of charging the phone in this mode is that the battery is less stressed, is less heated, and that the lifetime of the battery is prolonged, and thus also the lifetime of the phone itself. The impact of this advantage must not be underestimated. Indeed, when viewed on a global scale, if the billions of phones being used in the world today would have a 10% to 30% longer lifetime, this would have a huge impact on resources and on the global energy required for manufacturing (e.g. 10% less waste each and every year).

The inventors are of the opinion that this adapter device goes completely against the trend of faster and faster charging, and against the constant push from industry to make sure that rechargeable devices have a lifetime of only a couple of years.

Another advantage is that the amount of energy required to charge the rechargeable device is reduced, e.g. up to 10% less, if the battery is slowly charged as compared to fast. This is mainly due to power losses in the cable and/or due to the internal resistance in the battery. Again, this may not seem a lot for an individual charging cycle of a single phone, but considering that smartphones are typically recharged every single day, and that billions of people have a smartphone, the global impact is enormous.

But of course the present invention is not limited to this particular example, and a second list with a single PDO with a fixed 5V supply voltage and a current value other than 1W can also be used.

Stated in simple terms, the first example describes a power adapter which can be configured in a fast charging mode and a slow charging mode, and the user can determine which mode is being used. For example, if the user needs to catch a plane and does not have a lot of time, he may choose the fast charging mode. But at another moment, e.g. in the evening, or during the night, when he is asleep, he may choose to charge the rechargeable device slowly, in order to prolong its lifetime. In other words, a user may use the slow charging mode most of the time, and select the fast charging mode only occasionally, when needed.

It will be appreciated (in hind-sight) that the solution offered by the present invention is at least partially based on the fact that the power adapter tricks the rechargeable device by not revealing its true source capabilities (in the second mode of operation), but by pretending it cannot deliver more power, and by exploiting the fact that the rechargeable device has no other option than to accept what is being offered.

EXAMPLE-2:

The first example may not be ideal for all rechargeable devices, because it does not provide a 9V supply voltage, but the rechargeable device may have less internal losses or less heat generation if it could use a 9V supply voltage instead of a 5V supply voltage. This is solved in the second example, by advertising a second list that contains two PDOs with a fixed supply voltage, for example:

$$List2 = \{PDO1, PDO2\}$$

    PDO1 (5V, 1A), i.e. about 5 W
    PDO2 (9V, 0.55A), i.e. about 5 W

As can be seen, in this example, the power that can be delivered at 5V is substantially the same as the power that can be delivered at 9V, and the rechargeable device is free to choose one of the two options being presented.

EXAMPLE-3:

When doing experiments, the inventors found that some rechargeable devices will typically select the option yielding the highest power (and not the highest voltage). Embodiments of the present invention may exploit this fact in order to favour the use of a certain supply voltage. It was also found that power losses (e.g. Joule losses) can be reduced when using a 9V signal rather than a 5V signal. The following second list can be used to favour the use of the 9V supply voltage over 5V:

$$List2 = \{PDO1, PDO2\}$$

    PDO1 (5V, 0.95A), i.e. about 4.75 W
    PDO2 (9V, 0.55A), i.e. about 4.95 W

As can be seen, in this example, the power that can be delivered at 9V is slightly higher than the power that can be delivered at 5V. In this way, the power adapter may cause rechargeable devices to select the 9V PDO, resulting in lower Joule losses.

In a variant of this embodiment, the power at 9V is slightly higher than the power at 5V, but other current values are used, for example: PDO1 (5V, 1.5A) ≈7.5W, PDO2 (9V, 0.85A) ≈7.65W.

In another or a further variant (not shown) of FIG. 1, the power adapter has a plurality of second lists (e.g. stored in non-volatile memory), and one of these second lists is selected based on the time period that the button 110 is held down (e.g. in accordance with a table mentioned in a manual). This power adapter could work as follows: when the power adapter 100 is inserted in a wall connection, the first mode of operation is selected. If the button 110 is not asserted (e.g. pushed or touched) (e.g. longer than a predefined period, e.g. longer than 3 seconds, or longer than 5 seconds, or another time period), the power adapter 100 is configured in the first mode of operation, and will inform the rechargeable device of its source capabilities using first list of DO's as described above, a negotiation will take place, and if an agreement is reached, will start charging the rechargeable device. If the second mode of operation is to be used (e.g. a "slow charging" mode), the button 110 is pushed for a certain time period, determined by the controller by determining a time value when the button 110 is pressed, and by determining a time value when the button 110 is released, and by calculating the difference between these time values. Preferably the controller 110 has a timer to measure this time period, but other ways to determine this time are also possible, e.g. by providing a step function to an RC circuit when the button is pushed, and measuring the output voltage at the moment when the button is released, e.g. using an analog-to-digital convertor (ADC), and converting the voltage into a time value. The power adapter may save the selected mode in a non-volatile memory, and assert this mode as the default mode the next time a device is plugged, and/or the next time the charger itself is powered on (e.g. after being unplugged from a wall plug).

**FIG. 2** shows a 3D perspective view of a power adapter device 200, which can be seen as a variant of the power adapter of FIG. 1. The main visible difference is that the power adapter 200 does not have a push-button and LEDs, but has a rotary button 211 for allowing a user to select a maximum amount of power that the power adapter 200 is allowed to provide to the rechargeable device. After reading the explanation above, the reader will understand that, in fact, it is not the power adapter that limits the current (and thus the power), but the rechargeable device itself has to make sure it does not draw more current that what is agreed upon. Nevertheless, for a user, it will appear as if the power adapter is the one that limits the power, and in the rest of the description this distinction will no longer be made, but it will be described as: "the power adapter limits the power to a certain amount", or "the power adapter can deliver a certain amount of power", even if its hardware is capable of providing more power.

EXAMPLE-4:

In the example of FIG. 2, the user can choose between three options: 5W, 10W or 20W. In fact this means "at most 5W, at most 10W, at most 20W".

When the rotary button 211 is positioned in the "20W" position, the power adapter is configured in the first mode, and may for example provide the following first list of PDO's:

$$List1 = \{PDO1, PDO2, PDO3, PDO4\}$$

PDO1 (5V, 3A), i.e. 15 W
PDO2 (9V, 2.2A), i.e. 19.8 W
PDO3 (15V, 1.3A), i.e. 19.5 W
PDO4 (20V, 1A), i.e. 20 W

When the rotary button 211 is positioned in the "10W" position, the power adapter is configured in the second mode, and may for example provide the following second list of PDO's:

$$List2 = \{PDO1, PDO2, PDO3 \}$$

PDO1 (5V, 2A), i.e. 10 W
PDO2 (9V, 1.1A), i.e. 9.9 W
PDO3 (15V, 0.66A), i.e. 9.9 W

When the rotary button 211 is positioned in the "5W" position, the power adapter is also configured in the second mode, and may for example provide the following second list of PDO's:

$$List2 = \{PDO1, PDO2\}$$

PDO1 (5V, 1A), i.e. 5 W
PDO2 (9V, 0.55A), i.e. 4.95 W

EXAMPLE-5:

In a variant (not shown) of FIG. 2, the rotary button would furthermore have a position for delivering at most 30W. In this case, the power adapter would be configured in the first mode when the rotary button is positioned in the 30W position, and the first list may look as follows:

$$List1 = \{PDO1, PDO2, PDO3, PDO4\}$$

PDO1 (5V, 3A), i.e. 15 W
PDO2 (9V, 3A), i.e. 27 W
PDO3 (15V, 2A), i.e. 30 W
PDO4 (20V, 1.5A), i.e. 30 W

and the power adapter would be configured in the second mode when the rotary button is position in the 20W or 10W or 5W position, and the second list may look as follows:

for 20W: List2={PDO1, PDO2, PDO3, PDO4},
with PDO1 (5V, 3A), PDO2 (9V, 2.2A), PDO3 (15V, 1.3A), PDO4 (20V, 1A);
for 10W: List2={PDO1, PDO2, PDO3},
with PDO1 (5V, 2A), PDO2 (9V, 1.2A), PDO3 (15V, 0.66A);
for 5W: List2={PDO1, PDO2},
with PDO1 (5V, 1A), PDO2 (9V, 0.6A);

EXAMPLE-6:

In a further variant (not shown) of FIG. 2, the rotary button would not only have a position for 30W, but also for 60W (max). In this case, the power adapter would be configured in the first mode when the rotary button is positioned in the 60W position, and the first list may look as follows:

$$List1 = \{PDO1, PDO2, PDO3, PDO4\}$$

PDO1 (5V, 3A), i.e. 15 W
PDO2 (9V, 3A), i.e. 27 W
PDO3 (15V, 3A), i.e. 45 W
PDO4 (20V, 3A), i.e. 60 W

and the power adapter would be configured in the second mode when the rotary button is position in the 30W or 20W or 10W or 5W position, and the second list may look as follows:

for 30W: List2={PDO1, PDO2, PDO3, PDO4},
with PDO1 (5V, 3A), PDO2 (9V, 3A), PDO3 (15V, 2A), PDO4 (20V, 1.5A);
for 20W: List2={PDO1, PDO2, PDO3, PDO4},
with PDO1 (5V, 3A), PDO2 (9V, 2.2A), PDO3 (15V, 1.3A), PDO4 (20V, 1A);
for 10W: List2={PDO1, PDO2, PDO3},
with PDO1 (5V, 2A), PDO2 (9V, 1.2A), PDO3 (15V, 0.66A);
for 5W: List2={PDO1, PDO2},
with PDO1 (5V, 1A), PDO2 (9V, 0.6A);

In other variants of FIG. 2, the rotary button has more or less than 3 predefined positions, and/or has labels with values other than 5W, 10W, 20W, and/or uses a first and/or second list with more or less PDOs, and/or with other current values than the values mentioned above.

In the examples described so far, the first list and the second list have a predefined number of PDO's, and the PDO's have predefined values, but the present invention is not limited thereto, as will be described next. Since the values of the power, and of the fixed voltages, and thus of the currents are known beforehand, these lists can be prepared beforehand, and e.g. stored in a non-volatile memory (e.g. flash).

**FIG. 3** shows a 3D perspective view of a power adapter device 300, which can be seen as a variant of the power adapter 200 of FIG. 2. The main visible difference is that the rotary button 311 has two (valid) positions: a first position labelled "MAX", a second position labelled "25%".

In this embodiment, the power adapter 300 further comprises "current measurement means" for measuring the amount of current that is actually drawn by the rechargeable device. The current measurement means may comprise e.g. a shunt resistor, or one or more magnetic sensor elements (e.g. one or more Hall elements, one or more magneto-resistive (MR) elements, e.g. TMR, GMR, XMR, AMR element).

When the rotary button 311 is positioned in the position labelled "MAX", it means that the user wants the rechargeable device to be charged as soon as possible. The power adapter device is configured in the first mode operation ("fast charge mode"), and provides a first list of PDO's to the rechargeable device, e.g. the following list:

$$List1 = \{PDO1, PDO2, PDO3, PDO4\},$$

with PDO1 (5V, 3A), PDO2 (9V, 3A), PDO3 (15V, 3A), PDO4 (20V, 3A)

In this first mode, the current provided to the rechargeable device does not need to be measured.

When the rotary button 311 is positioned in the position labelled "25%", it means that the user wants the rechargeable device to be charged with about 25% of the maximum current it would normally use when being charged in "fast charging mode". Now, the power adapter device 300 is configured in the second mode of operation ("eco mode"), and in a first step provides the above mentioned first list of PDO's to the rechargeable device, and allows the rechargeable device to be charged for a first period of time (e.g. less than 30 seconds) with a relatively high current, and this current is measured using the "current measurement means". Suppose that the rechargeable device has used 9V, and has drawn a current of about 2.2 A, i.e. has drawn a power of about 9*2.2=19.8W, and then, in a second step, the power adapter 300 provides a second list of PDO's having current values for allowing at most 25% of 19.8W, i.e. 4.95W at the various voltages. The second list may for example look like this:

$$List2 = \{PDO1, PDO2, PDO3 \},$$

with PDO1 (5V, 0.99A), PDO2 (9V, 0.55A), PDO3 (15V, 0.33A)

This second list is then presented to the rechargeable device, which can then select one of these PDO's. If an agreement is reached, the controller of the power adapter configures the electrical circuit 1618 to generate the voltage level that was agreed-upon, and provides this voltage on the output node 1619 of the electrical circuit, and on the VBUS pins of the USB-C connector 1603. In case the calculated power is below a predefined power (e.g. 4W), the charger device may be adapted for advertising a list of PDO's corresponding to the predefined power.

In a variant (not shown) of **FIG. 3,** the eco-position may have another value than 25%, for example 30% or 33% or 35% or 40% or 45% or 50% or 55% or 60% or 65%, but the same principles are used: first measuring a "maximum" current during a short period of time, then, automatically advertising a second list with reduced current values, and if an agreement is reached for one of these PDO's, configuring the electrical circuit accordingly, and allowing the rechargeable device to be charged.

**FIG. 4** shows a 3D perspective view of a power adapter device 400, which can be seen as a variant of the power adapter 300 of FIG. 3, wherein the rotary button 411 has three predefined positions, in the example labelled as: 25%, 50% and MAX.

If the rotary button 411 is set in the position "MAX", the power adapter is configured in the first configuration mode, the first list of PDO's is advertised, and if an agreement is reached for one of these PDO's, the electrical circuit is configured accordingly for allowing the rechargeable device to be charged.

If the rotary button 411 is set in the position "25%", the power adapter is configured in the second configuration mode (or "eco-mode"), and in a first step, a relatively high current is allowed to be drawn by the rechargeable device, this current is measured, and then in a second step, an updated second list is advertised, and if an agreement is reached for one of these PDO's with reduced power, the electrical circuit is configured accordingly for allowing the rechargeable device to be charged.

If the rotary button 411 is set in the position "50%", the power adapter is also configured in the second configuration mode (or "eco-mode"), and the same two-step procedure is followed as in the case of 25%, but another second list is advertised, e.g. having other current values and/or a different number of PDO's.

In a variant (not shown) of FIG. 4, the rotary button 411 has more than three predefined positions. Again, in the position "MAX", the power adapter is configured in the first mode, and the first list of source capabilities is advertised, and the rechargeable device is allowed to charge the battery with any of these PDOs. In any of the other positions, the power adapter 400 is configured in the second mode, and the same two-step procedure is applied, but with different second lists.

**FIG. 5** shows a 3D perspective view of a power adapter device 500, which can be seen as a variant of the power adapter 400 of FIG. 4, wherein the rotary button 511 does not have three predefined discrete positions, but is movable in a continuous manner from a first position (labelled MAX) to a second position (labelled 25%). In the position "MAX", the power adapter is configured in the first mode ("fast charge mode"), and the first list of source capabilities is advertised, and the rechargeable device (not shown) is allowed to charge its battery with any of these PDOs. In any of the other positions, the power adapter 400 is configured in the second mode, and the same two-step procedure is applied, but with different second lists.

In the embodiments shown in **FIG. 3 to FIG. 5,** when the rotary button is not in the "MAX" position, a two-step procedure is used to first determine a highest current the rechargeable device would draw if the power was not limited by the power adapter, and then, in a second step, is limited to a value smaller than the measured highest current value, e.g. to a fraction thereof.

In a variant (not shown) of **FIG. 3 to FIG. 5,** the label 25% is replaced by "MIN" (abbreviation of "minimum").

When the rotary button is set to "MAX", the power adapter is configured in the first mode of operation, and the same procedure is followed as described in FIG. 3 to FIG. 5.

When the rotary button is set to "MIN", the controller 1604 of the power adapter 1600 is configured to determine a "minimum acceptable power" (or a power value close to the minimum, e.g. within a margin of about 20%) that the rechargeable device (e.g. the phone) is willing to accept, and if an agreement is reached, to provide an output power compatible with that minimum acceptable power. It is noted that this minimum acceptable power can be found based on the acceptance or refusal of various lists of source capabilities presented by the controller 1604 to the processor 1652 of the rechargeable device 1650. In practice, the "minimum acceptable power" is searched in a predefined power range, or stated in other words, in practice a lower power limit and an upper power limit is used. The upper power limit may be an absolute value, e.g. the above mentioned 60 W value, or another upper value. The lower power limit may be an absolute power value, e.g. equal to 2.0 W, or may be a relative power value, e.g. 10% of the power corresponding to the above described "highest measured current" multiplied by the voltage of the voltage level that was applied when measuring this current.

In an embodiment, the "minimum acceptable power" can be found iteratively, by repeatedly proposing a second list of source capabilities with decreasing power levels, e.g. starting from a relatively high power value (e.g. a value of 60W), and stepwise decreasing this power level, e.g. by 10% in each step, until the lower power limit is reached, or until the rechargeable device no longer accepts any of the PDOs proposed by the power adapter, or until a predefined numbers of iterations is performed, or using another suitable criterion to stop the iterations.

In another embodiment, the "minimum acceptable power" can be found iteratively, by repeatedly proposing a second list of source capabilities with increasing power levels, e.g. starting from a relatively low power value, e.g. the above mentioned lower power limit. If a second list with this power value is acceptable by the rechargeable device, a "minimum acceptable power" is found. If this second list is not acceptable, a new second list is proposed with increased power levels, e.g. by 10% in each step, until at least one PDO of the second list proposed by the power adapter is acceptable for the rechargeable device, or until a predefined numbers of iterations is performed, or until the upper power limit is reached or passed, or using another suitable criterion to stop the iterations.

In another embodiment, the "minimum acceptable power" is determined by requesting the information (e.g. in the form of minimum PDOs) to the rechargeable device via a digital communication (e.g. on the CC pins) according to a predefined digital protocol.

**FIG. 6** shows a 3D perspective view of a power adapter device 600, which can be seen as a variant of the power adapter 100 of FIG. 1, wherein the power adapter 600 further comprises at least one temperature sensor 608 communicatively connected to the controller of the power adapter device 600, for measuring at least one temperature value. For example, the temperature sensor is integrated in the end portion 615. The power adapter 600 is configurable in a first mode ("fast charging mode") or a second mode ("eco charging mode"), using the button 610.

In the first mode of operation, the controller of the power adapter 600 will provide a first list of source capabilities to a processor of a rechargeable device that is connected to the USB-C connector 603. The first list may be a predefined list.

In the second mode of operation, (also referred to as "eco-mode"), the controller of the power adapter 600 is configured to repeatedly (e.g. periodically)

a) measure a temperature using the at least one temperature sensor 608;
b) to update the second list of source capabilities as a function of the measured temperature;
c) to inform the rechargeable device of these updated source capabilities, (e.g. by advertising this updated second list to the processor of the rechargeable device;
d) to negotiate about the updated source capabilities, and if an agreement is reached;
e) to control the electrical circuit correspondingly, e.g. by maintaining or changing the voltage level provided by the electrical circuit.

Step a) is typically performed in each iteration, while steps b) to e) only need to be performed under some circumstances. Step a) may comprise testing if a certain condition is satisfied (e.g. by comparing the temperature with a threshold value). Steps b) to e) may be skipped depending on the outcome of the test.

Step b) may comprise: changing a current value of at least one of the DO's of the second list, and/or may: removing one or more DOs from the list (e.g. when the measured temperature is larger than a first threshold value), and/or adding one more DOs to the list (e.g. when the measured temperature is smaller than a second threshold value).

In the embodiment illustrated in FIG. 6, the power adapter device 600 further comprising a USB-C compatible cable portion 613 having a first end (proximal to the power adapter device) that is fixedly connected to the housing 614, and having a second end (distal to the power adapter device) comprising said USB-C connector 603 that is connectable to the USB-C port 1651 of a rechargeable device 1650 (see FIG. 16). It is an advantage of this embodiment that is can measure a temperature that is related to an actual temperature of the rechargeable device (e.g. a smartphone). The temperature sensor 608 may be an infrared temperature sensor embedded in the USB-C connector at the second end 615 and configured for measuring a temperature of a rechargeable device casing. The second end 615 may comprise an aperture adapted to allow infrared radiation from the rechargeable device casing to reach the embedded infrared temperature sensor.

A control algorithm may measure an initial temperature before recharging of the battery actually starts, and consider this temperature as an ambient temperature, and may consider subsequent temperature measurements as updated temperature values caused by heating related to the charging of the battery. The control algorithm may be configured to keep a difference between the updated temperature values and the initial temperature below a certain threshold (e.g. below 10°C or below 20°C).

In a variant, the temperature sensor 608 may be mounted to the housing 614 of the power adapter device (not shown), and the power adapter 600 may or may not comprise the USB-C cable portion 613. The same control loop may be used to update the second list of source capabilities, and thus to control the maximum amount of power that the power adapter provides to the rechargeable device.

In another or a further embodiment, the power adapter has two temperature sensors: e.g. one arranged for measuring a temperature of the rechargeable device, and one arranged for measuring an ambient temperature. The control loop may be configured to keep a difference between the two temperature values obtained from the sensors below a certain threshold.

The power adapter 600 may of course also comprise one or more LEDs (not shown), e.g. to indicate whether the power adapter is operating in the first mode or the second mode, and/or to give an indication about the temperature difference.

In a variant of FIG. 6, a selection mean (e.g. the button 610) is located in the second end 615 of the cable, with or without temperature sensor. For example, a push button is located in the second end 615 and electrically connected to the charger device via the cable 613 such that a user can easily switch the charging mode by pressing the push button.

In the embodiments illustrated in **FIG. 1 to FIG. 6,** it was assumed that external power source was a main supply source. In this case, the input port 1601 of the power adapter may have the form of an AC wall plug, and the electrical power circuit 1602 will typically comprise an AC-to-DC convertor followed by a DC-to-DC convertor (e.g. comprising a voltage regulator). Such circuits are well known in the art, and hence need not be explained in more detail here. The DC-to-DC convertor may be omitted in certain embodiments, e.g. in embodiments where the AC-to-DC convertor converts the input voltage (e.g. 110V AC or 220V AC) to a 5V DC signal, and where only a 5V signal is provided to the rechargeable device.

Variants of the embodiments shown in FIG. 1 to FIG. 6, do not have an AC input port, but have a second USB-C connector (not shown in FIG. 1 to FIG. 6) for receiving power from an external DC power source, e.g. from a battery pack, or another DC power source. In this case, the electrical power circuit 1602 will not comprise an AC-to-DC convertor, but will preferably comprise a DC-to-DC convertor, although that is not absolutely required.

**FIG. 7 to FIG. 11** show a few additional embodiments having a first USB-C connector 703 for providing power to a rechargeable device (not shown, and a second USB-C connector 716 for receiving power from an external power source.

The power adapter 700 of **FIG.** 7 comprises a housing 714 and two USB-C compatible cable portions 713a, 713b. The first (male) USB-connector 703 is extending from a first plug portion 715, and the second (male) USB-C connector 716 is extending from a second plug portion 717.

The main purpose of FIG. 7 is to show an example of a mechanical arrangement comprising two cable portions and two USB-C connectors.

**FIG. 7** shows a housing 714 comprising a button 710 and a LED 706, more or less similar to FIG. 1, but it is of course also possible to combine the mechanical arrangement of FIG. 7 with other selection means or configuration means, e.g. with a rotary button, and to implement the same or a similar functionality as described in FIG. 1 to FIG. 6. This also applies to the housings shown in FIG. 8 to FIG. 11.

The block-diagram of FIG. 16 having a single controller 1604 may still be used, but in this case the controller 1604 needs to communicate and negotiate both with the rechargeable device (via the first USB-C connector 1603) as well as with the external power source (via the second USB-C connector).

In a variant, the power adapter has two separate controllers, a first controller for communicating with the rechargeable device (via the first USB-C connector 1603), and a second controller for communicating with the external power source (via the second USB-C connector), and the first controller would be connected to the second controller, for exchanging information.

In a particular embodiment, the power adapter 700 does not comprise a DC-DC convertor, but is configured to present the same voltages or a subset of the voltages offered to it by the external power source to the rechargeable device, with the added functionality that the power delivered to the rechargeable device can be limited, which was not possible if the external power source would be connected directly to the rechargeable device.

It is pointed out that the dimensions or relative dimensions of the various components in the drawings are not drawn to scale. This is particularly true for FIG. 7.

The skilled reader will understand that it is possible to incorrectly connect the power source to the first USB-C connector 703, and to incorrectly connect the rechargeable device to the second USB-C connector 716. In a particular embodiment, the controller (or controllers) of the power adapter 700 is furthermore configured for detecting if the external power source is connected to the second USB-C connector (instead of the first), and for detecting if the rechargeable device is connected to the first USB-C connector (instead of the second), and the electrical circuit of the power adapter 700 furthermore comprises rerouting means (e.g. a plurality of power switches, e.g. four power switches) for automatically rerouting the power signals by connecting the input node of the electrical circuit either to the VBUS line of the first or the second USB-C connector, and by connecting the output node of the electrical circuit either to the VBUS line of the other USB-C connector, in case an incorrect connection is detected. This offers the advantage that the cables do not need to be unplugged and swapped by a user, which is more convenient. Optionally one or more LEDs or a bi-color LED are provided, on each of the plug portions 715, 717 for indicating that the USB-C connector is incorrectly connected. In the latter case, the rerouting means (e.g. four power switches) may be omitted.

**FIG. 8** shows a 3D perspective view of a power adapter device 800, which can be seen as a variant of the power adapter 700 of FIG. 7. This embodiment has a first (female) USB-C connector 803 for connection with a rechargeable device via a first USB-C cable (not shown), and has a second (female) USB-C connector 816 for connection with an external power source via a second USB-C cable (not shown). Everything else described above is also applicable here, for example, the power adapter 800 may have a rotary button instead of the button 810; and/or may have no LEDs or more than one LED. Optionally the power adapter 800 is configured to detect an incorrect connection to the power source and/or to the rechargeable device, and to indicate the error by means of LEDs or to automatically reroute the signals using rerouting means (e.g. four power switches).

The main purpose of FIG. 8 is to show a possible mechanical arrangement wherein the power adapter 800 has a housing 814, and two USB-C connectors 803, 816, and optionally also configuration means or selection means (e.g. a button, a rotary button, a slider, etc.), and optionally one or more LEDs 806. In FIG. 8 only a button and a LED are shown, but other configuration means and selections means, e.g. as described in FIG. 1 to FIG. 6 and the related functionality, can also be combined with this mechanical arrangement. As a variant, the input USB-C connector 816 may be a male USB-C connector such that the power adapter can be directly attached to another USB-C power adapter.

**FIG. 9** shows a 3D perspective view of a power adapter device 900, which can be seen as a variant of the power adapter 700 of FIG. 7.

The power adapter 900 of FIG. 9 has a single USB-C cable portion 913 and two USB-C connectors: a first (male) USB-C connector 903 extending from a first connector portion 915 for connection with the USB-C port 1651 of a rechargeable device (e.g. a phone, a laptop, etc.), and a second (male) USB-C connector 916 extending from a second connector portion 917 for connection with a USB-C port of a DC power source (e.g. a power adapter or a battery pack). In this embodiment, the controller 1604 and the electrical circuit 1619 of the power adapter are integrated in the first connector portion 915. In the example shown in FIG. 9, the power adapter 900 has a button 910 and a LED 906, but other selection means or configuration means (e.g. a rotary button) and/or another number of LEDs may also be used.

In a variant, the electrical circuit 1619 and the controller 1604 and the selection means and the optional LEDs and the optional rerouting means (e.g. four power switches) are integrated in the second connector portion 917 instead of the first connector portion 915, or partially embedded in the first connection portion 915 and partially embedded in the second connector portion 917.

The main purpose of FIG. 9 is to show a possible mechanical arrangement wherein the electrical components of the power adapter 900 are mainly incorporated in one of the two connector portions 915, 917, hence a separate housing as in FIG. 7 is not required, and only one cable portion is required. The embodiment of FIG. 9 has a button 910 and a LED 906, but other configuration means or selections means, e.g. as described in FIG. 1 to FIG. 6 and the related functionality, can also be combined with this mechanical arrangement.

**FIG. 10** shows a 3D perspective view of a power adapter device 1000, which can be seen as a further variant of the power adapter 900 of FIG. 9, wherein the second connector portion 1017 is not only connected to the first connector portion 1015a via a first USB-C cable portion 1013a (similar as in FIG. 9), but is also connected to a third connector portion 1015b via a second USB-C cable portion 1013b, acting as a mere cable.

With the power adapter 1000, a rechargeable device can be charged in "fast charging mode" by connecting the connector plug 1017 to the power source, and by connecting the connector plug 1015b to the rechargeable device. Alternatively the rechargeable device can be charged in "eco mode" by connecting the connector plug 1017 to the power source, and by connecting the connector plug 1015a to the rechargeable device.

In the example shown in FIG. 10, the power adapter 1000 has a button 1010 and a LED 906, but other selection means or configuration means (e.g. a rotary button) and/or another number of LEDs may also be used, and the power adapter may implement the associated functionality, e.g. as described in FIG. 1 to FIG. 6. In a variant, a single cable portion is mechanically attached to the second connector portion 1017 which is then split into a first USB-C cable portion 1013a and a second USB-C cable portion 1013b.

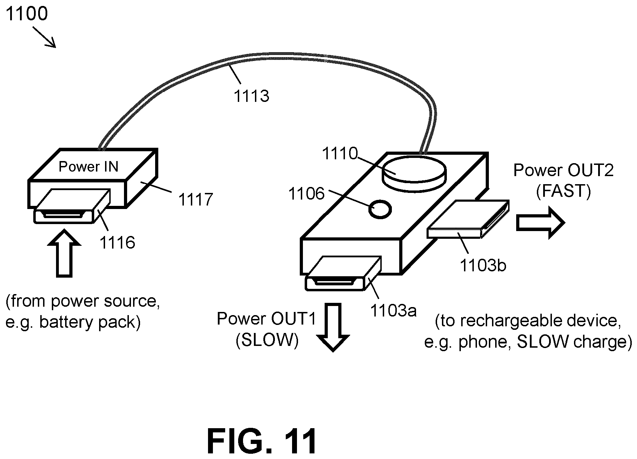

**FIG. 11** shows a 3D perspective view of a power adapter device 1100, which can be seen as a further variant of the power adapter 1000 of FIG. 10, where the USB-C connector 1003b is not connected to the second USB-C connector 1017 via a separate cable portion 1013b, but also extends from the first connector portion 1015a. It is repeated that the LED 1106 and the selections means 1110 are optional.

In the embodiments described above, in FIG. 1 to FIG. 11, the power adapter devices are configurable in a first mode of operation (e.g. "fast charging") or in a second mode of operating (e.g. "slow charging") using e.g. a button or a rotary button, but the present invention is not limited thereto, and may comprise another mechanical component that can be manipulated by a user, such as for example:

> i) a push-button having a pressed state (or "down state") corresponding to one of the first and second mode of operation, and a released state (or "up state") corresponding to the other of the first and second mode of operation;
> ii) a press-button having a pressed state and a released state, for changing or toggling the mode of operation each time the press-button is pressed or released;
> iii) a rotary knob having a plurality of discrete positions, or movable in a continuous manner between two positions;
> iv) a slider having a plurality of discrete positions, or movable in a continuous manner between two positions;
> v) a switch having a first condition corresponding to the first mode of operation, and having a second position corresponding to the second mode of operation;
> vi) a toggle switch for changing or toggling the mode of operation each time the toggle switch is asserted;
> but the present invention is not limited to these selection means or configuration means, and other configuration means can also be used, such as for example:
> vii) a first sensor (e.g. a capacitive sensor, a pressure sensor, a magnetic sensor, etc.) for configuring the power adapter device in the first mode of operation, and a second sensor (e.g. a capacitive sensor, a pressure sensor, a magnetic sensor, etc.) for configuring the power adapter device in the second mode of operation; or
> vii) a sensor (e.g. a capacitive sensor, a pressure sensor, a magnetic sensor, etc.) for changing or toggling the mode of operation each time the sensor is triggered;
> viii) an accelerometer or a shock sensor for changing or toggling the mode of operation each time the accelerometer or shock sensor is triggered.

but the present invention is not limited to these selection means or configuration means, and it is also possible to configure the power adapter device in the first or second mode of operation, or to change or toggle the mode of operation using configuration techniques, as will be described next. They offer the advantage that "mechanical manipulation means" such as a button or a slider or a knob or a switch or the like can be omitted.

**FIG. 12A and FIG. 12B** illustrate a configuration technique that can be used in embodiments of the present invention, to configure a power adapter in a first mode of operation or a second mode of operation. In the example shown in FIG. 12A and FIG. 12B, a USB-C cable 1260 is used having a plug portion 1261 with at last one marking, e.g. a graphical marking, a textual marking, a mechanical marking (e.g. a recess or protrusion), a textural marking (e.g. a smooth surface, or a rough surface), preferably two markings: one marking on a first side of the plug portion, and another marking on a second side of the plug portion, opposite the first portion. In the example shown in FIG. 12A and FIG. 12B, the plug portion 1261 has a first text e.g. "Fast" on a first side of the plug portion, and a second text, e.g. "Slow" or "Eco" or "Smart" on the second side of the plug portion, opposite the first side. Preferably the housing 1214 also has a visual marking or a tactile marking, in the example shown: a triangular marking, but the present invention is not limited hereto.

The controller of the power adapter 1200 is configured for detecting a first or a second cable orientation, for example as described in the USB-C specification, but not only uses the detected orientation for correctly configuring certain pins of the USB-C connector, but furthermore uses this information to configure the power adapter in the first or the second mode of operation.

The power adapter 1200 is shown with an AC input port, but that is not absolutely required, and another input port, e.g. a second USB-C connector (male or female), may also used. The power adapter 1200 is shown without a mechanical manipulation means (such as a button, knob, etc.) and without any LEDs, and indeed, the power adapter 1200 does require such mechanical manipulation means, but preferably does comprise one or more LEDs, e.g. for indicating the mode of operation, and/or for indicating that power is being delivered or not.

**FIG. 13** illustrates another configuration technique that can be used in embodiments of the present invention, to select or configure the mode of operation of a power adapter 1300.

The controller of the power adapter 1300 further comprises a timer, and is configured for detecting if the USB-C cable 1360, which is connectable to the rechargeable device (e.g. smartphone, laptop) is being connected at a first moment in time (t1). The power adapter 1300 is configured in an initial mode e.g. the first mode of operation, as illustrated in FIG. 13(1).

The power adapter informs the rechargeable device of its source capabilities by using first list of DO's as described above, a negotiation will take place, and if an agreement is reached, will start charging the rechargeable device, as long as the USB-C cable is left in this state (e.g. longer than a predefined period, e.g. longer than 3 seconds, or longer than 5 seconds, or longer than 10 seconds)..

If the second mode of operation is to be used (e.g. a "slow charging" mode), the USB-C cable is unplugged at a second moment in time (t2), the controller determines and temporarily stores this time value (t2), and the USB-C cable is re-plugged at a third moment in time (t3), the controller determines this time value (t3), and calculates a difference $\Delta t = t3-t2$ between t3 and t2, and sets or changes the mode based on this time difference. Optionally or alternatively, a second time difference can be calculated (e.g. t2-t1, or t3-t1) and can be used to select a different mode, or toggle between the modes.

In an embodiment, if $\Delta t$ is smaller than a predefined threshold Tr, the power adapter is configured in the first mode of operation, and if $\Delta t$ is larger than said predefined threshold Tr, the power adapter is configured in the second mode of operation. In another embodiment, if $\Delta t$ is smaller than a predefined threshold Tr, the power adapter is configured in the second mode of operation (e.g. "slow mode"), and if $\Delta t$ is larger than said predefined threshold Tr, the power adapter is configured in the first mode of operation (e.g. "fast mode").

In another embodiment, the power adapter may comprise a plurality of predefined second lists, and depending on the time difference $\Delta t = t3-t2$, one of these second lists is selected.

In another or further embodiment, the power adapter only considers the time difference, irrespective of whether the orientation of the USB-C cable has changed or not.

In another or further variant, the power adapter not only determines the time difference between the moment of unplugging and re-plugging, but also checks if the cable orientation has changed, and selects one of the plurality of predefined second lists based on the time difference and on a change of orientation. For example, the charging mode is changed if the plug is detached and rotated.

While not shown, the power adapter 1300 may comprise one or more LEDs, for example to indicate the mode of operation currently selected.

In a variant (not shown) of FIG. 13, the power adapter has a USB-C cable portion that is fixedly connected to the housing 1314, and the USB-C cable portion has a button for emulating a disconnection. With this embodiment, a user does not have to physically unplug and re-plug the USB-C cable, but can obtain the same effect by simply pushing and holding the button for a predefined time period. In this way, mechanical wear to the USB-C connector can be reduced.

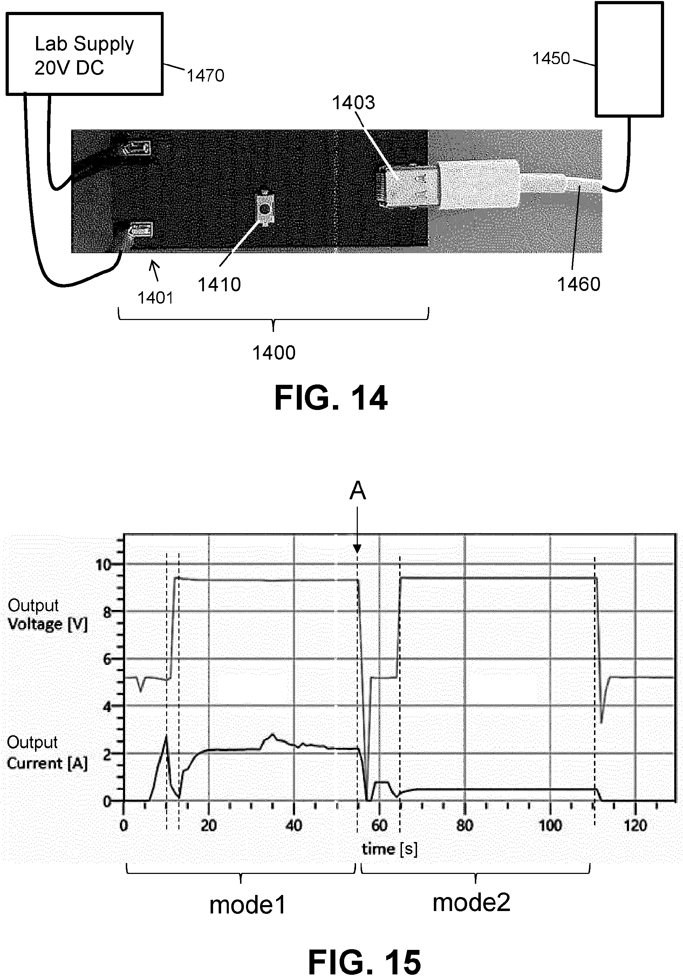

**FIG. 14** is a high-level block-diagram of a test-setup that was used to test certain functions and features described in this application document. It contains a picture of a test-board comprising an input port 1401 and a USB-C connector 1403, but details of the electronics are not shown in FIG. 14. Instead, reference is made to the high-level block-diagram shown in FIG. 16.

The main purpose of FIG. 14 is to show that the functionality described herein was tested using a "power adapter device" 1400 in the form of a small printed circuit board having an input port 1401 (in the example two wires were connected to a lab power supply 1470 that provided a voltage of 20V DC), and having a USB-C connector 1403 that was connected to a smartphone 1450 by means of a USB-C cable 1460. The printed circuit board 1400 has a button 1410, connected to a controller (not shown). The controller was configured to provide said first list of DO's or said second list of DO's to the smartphone, depending on the status of the button 1410.

**FIG. 15** shows measurement results of the test-setup illustrated in FIG. 14.

The graph of FIG. 15 shows a voltage signal, ranging from 0V to about 9V, and shows a current signal ranging from 0A to about 2.2A.

At t=0 the USB-C connector 1403 was connected to the USB-C port of the phone 1450.

At start-up, the power adapter board is configured in the first mode of operation (e.g. fast charging mode), and a first list of source capabilities is presented to the phone 1450:

$$List1 = \{PDO1, PDO2\},$$

with PDO1(5V, 3A) and PDO2(9V,3A).

As can be seen, at t=5s, the phone starts charging at 5V, and the current increases from 0A to about 2.5A.

At a time between 10s to about 13s, the phone requests a different supply voltage of 9V (in line with the first list of source capabilities) and after a successful negotiation the power adapter board changes the output voltage from about 5V to about 9V.

At t=about 13s, the 9V voltage is stable, and the current progressively ramps up to approximately 2.2 to 2.4A. This voltage and current is maintained by the phone until about t=55s. During the period from 13s-55s, an average power of about 20W is provided by the power adapter to the phone.

At t=55s, the button 1410 was pushed, and the power adapter device changes to the second mode of operation, also referred to herein as "reduced power mode" or "low power mode" or "eco mode", and a second list of source capabilities is presented to the phone 1450:

$$List2 = \{PDO1, PDO2\},$$

with PDO1(5V, 0.8A) and PD02(9V,0.5A).

During a transition period from about 55s to about 65s, the phone selects the 5V PDO in a first phase and starts charging at 5V, and then requests the 9V PDO, which results in an increase from 5V to 9V.

At t=about 65s, the 9V voltage is stable, and the current ramps up to approximately 0.5A, as defined in the second list of source capabilities. This voltage and current is maintained until about t=110s, when the phone is finally disconnected. During the period from about 65s to about 110s, an average power of about 4.5W is provided by the power adapter to the phone. For clarity, it is noted that the initial 5V charging phases (during ca. 10s) observed in the two modes is due to the phone charging algorithm. Other devices may request another PDO (e.g. 9V) and start charging without the 5V charging phase, such that the 5V to 9V transition period may be shorter, or even inexistent.

This experiment clearly demonstrates that a power adapter as described herein, is capable to force a smartphone to slowly charge its battery, even if the smartphone does not provide a "slow charging function" by itself. As explained above, using a power adapter according to embodiments of the present invention, a rechargeable device can be forced to slowly charge its internal battery, i.e. with a reduced current, causing less stress to the battery, less heating, a reduced risk to catching fire or causing an explosion, leading to a longer lifetime of the battery and of the rechargeable device, causing less waste and requiring less energy and resources to produce new devices, and therefore reducing the environmental footprint of e-device manufacturing.

The experiment illustrated in FIG. 14 and FIG. 15 was performed using a lab power supply as an external power source, but other external energy sources can also be used, e.g. another DC power source such as a USB-C adapter, a battery pack, a solar panel, etc. In the experiment of FIG. 14, a DC input voltage of 20V was used, from which a 5V and a 9V signal was derived, using a DC-to-DC convertor arranged on the board 1400 (not explicitly shown). While it is highly desirable to have a DC-to-DC convertor, because it allows to provide an output voltage which is different from the input voltage, it is pointed out that a DC-to-DC convertor is not absolutely required for the present invention to work, but in this case, a DC input voltage of 5V has to be provided, and the first list and the second list can only contain a DO with a fixed voltage of 5V.

As described above, if the power adapter comprises an AC-to-DC convertor, it is also possible to an AC power source, e.g. a mains power supply (e.g. 220V at 50 Hz or 110V at 60 Hz). Also in this case a DC-to-DC convertor is not absolutely required, but highly preferred.

In the experiment a particular smartphone 1450 was used that has a USB-C port, but the present invention will also work for charging other rechargeable devices having a USB-C port, such as e.g. tablets, laptop computers, etc.

**FIG. 16** shows a high-level block-diagram of an embodiment of a power adapter device 1600 proposed by the present invention. Most of the elements shown are already discussed above, but are summarized here for convenience.

The power adapter device 1600 comprises: an input port 1601 for receiving power from an external power source, an electrical circuit 1602 for optionally converting the received power, and a USB-C connector 1603 for providing power to a rechargeable device 1650.

The electrical circuit 1602 has an input node 1618 connected or connectable to the input port (e.g. via a switch), and has an output node 1619 connected or connectable to the USB-C connector (e.g. to the VBUS pin thereof). The electrical circuit 1602 may comprise an AC/DC convertor and/or a DC/DC convertor, but none of these are absolutely required.

The power adapter device 1600 further comprises at least one controller 1604, e.g. a single controller connected to the CC-line of the USB-C connector 1603; or two interconnected controllers, one controller connected to the input port 1601, and another controller connected to the USB-C connector 1603. The controller may also be referred to as "control and communication circuit".

The power adapter device 1600 may comprise one or two USB-C cable portions.

The power adapter device 1600 may comprise a second USB-C connector.

The power adapter device 1600 may further comprise a non-volatile memory 1605, e.g. flash, e.g. for storing executable instructions and/or predefined values or parameters or threshold values.

The power adapter device 1600 may further comprise one or more Light Emitting Diodes 1606.

The power adapter device 1600 may further comprise a temperature sensor 1608. This temperature sensor may be located in a USB-C cable portion, e.g. at a distal end of the USB-C cable portion.

The power adapter device 1600 may further comprise selection means or configuration means 1607, such as e.g. a button, a rotary knob, a slider, etc.

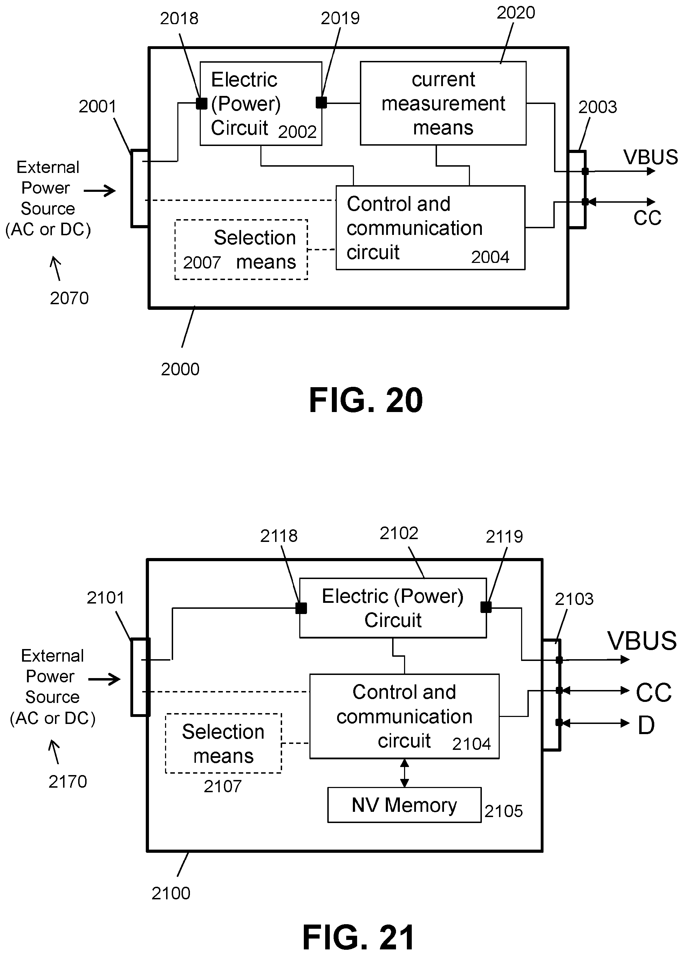

The power adapter 1600 may further comprise current measurement means which may be part of the electrical circuit 1602, or may be a separate component or circuit (e.g. as illustrated in FIG. 20).

In an embodiment, the power adapter 1600 further comprises rerouting means, e.g. a plurality of (e.g. two or four) power switches for disconnecting the input node 1618 from the input port 1601, and for disconnecting the output node 1619 from the USB-C connector, and for connecting the input port 1601 to the output node 1619, and for connecting the input node 1618 to the USB-C connector.

The power adapter device 1600 may be accommodated in a housing. The housing may comprise an AC plug portion. The power adapter device may be incorporated in a plug portion of a USB-C cable.

**FIG. 16** also shows a possible block-diagram of a rechargeable device 1650, in order to describe or explain certain functionality, but the present invention is not limited to charge rechargeable devices having this particular block-diagram, but it must have a USB-C port 1651, and a processor 1652 connected to the USB-C port, and a battery 1654. The rechargeable device 1650 typically also comprises additional circuitry for charging the battery 1654, referred to herein as "power management unit" 1653, which may comprise a DC-to-DC convertor. (it is noted that the word "processor" is used only to differentiate with the controller 1604 of the power adapter device 1600). The rechargeable device 1650 may of course comprise many other components, but these are not relevant for the present invention.

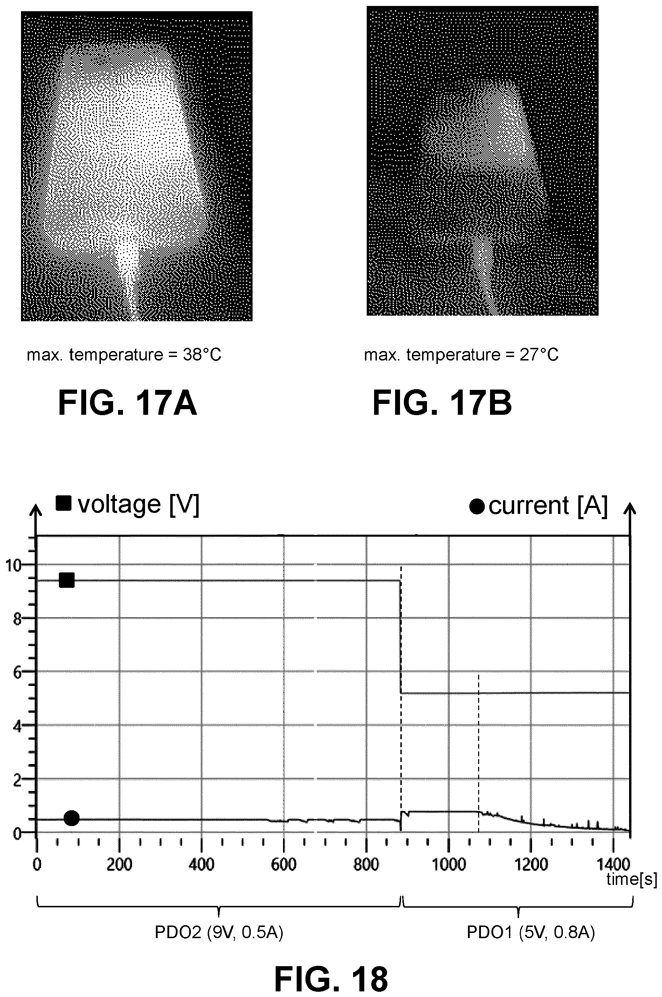

**FIG. 17A** shows a thermal picture of the smartphone 1450 (in the example: an IPhone 14 from Apple Inc.) that was used in the experiment described above (FIG. 14 and FIG. 15), while being charged using the power adapter of FIG. 14, configured in the first mode (fast charging mode). As mentioned above, the first list advertised to the smartphone had 2 fixed voltage PDOs : PDO1(5V, 3A) and PDO2(9V, 3A), thus allowing the smartphone to draw a maximum power of 27W. As illustrated in FIG. 15, in model, this smartphone agreed to charge with PDO2, and consumed approximately 20W during the experiment. As can be seen, this caused the temperature on the outer surface of the smartphone to increase to about 38°C. The temperature inside the smartphone, in particular the internal temperature of the battery is even higher, likely above 40° in a conservative estimation.

**FIG. 17B** shows a thermal picture of the same smartphone while being charged using the same power adapter but configured in the second mode (slow charging mode). As mentioned above, the second list advertised to the smartphone also had 2 fixed voltage PDOs : PDO1(5V, 0.8A) and PDO2(9V, 0.5A), thus allowing the smartphone to draw a maximum power of 4.5W, that is less than 25% of the power drawn in "fast charging mode". As illustrated in FIG. 15, in mode2, this smartphone agreed to charge with PDO2, either because the power (9V*0.5A=4.5W) associated with PDO2 is slightly higher than the power (4V*0.8A=4.0W) associated with PDO1 or because the voltage (9V) associated with PDO2 is higher than the voltage associated with PDO1 (5V), and consumed approximately 4.5W during the experiment. As can be seen, this caused the temperature on the outer surface of the smartphone to increase slightly above the ambient temperature to only about 27°C, which is more than 10°C less on the surface, but an even larger temperature difference for the battery itself, considering the thermal resistance.

**FIG. 18** shows a graph with a voltage curve and a current curve provided by the power adapter device of FIG. 14, configured in the second operating mode ("slow charge") when charging the smartphone 1450 until it was fully charged.

As can be seen, from t=0 s to approximately t=835 s, the power adapter supplied a 9V signal, and the smartphone drew a substantially constant current of 0.5A, in accordance with PDO2.

After about 835 s the smartphone and the power adapter device negotiated and agreed upon the use of PDO1, because the power adapter switches from 9V to 5V, and the phone is then allowed to draw 0.8A. As can be seen, initially the current drawn by the phone is still substantially constant, which suggests that the smartphone internally was still charging the battery using "constant current regulation", and this continues until a time of about 1070 s.

After about 1070 s, the current drawn by the smartphone starts to decrease over time, which suggests that the smartphone internally switched to "constant voltage regulation" to charge the battery.

It is interesting to see that the power adapter device of the present invention can prolong the battery lifetime without knowing the specifics of the battery.
When internally switched to a so called "constant voltage" mode to charge the battery, it is known that, during this phase, a constant voltage (depending on the type of battery) is being applied to the battery, (e.g. by the power management unit 1653 shown in FIG. 16)

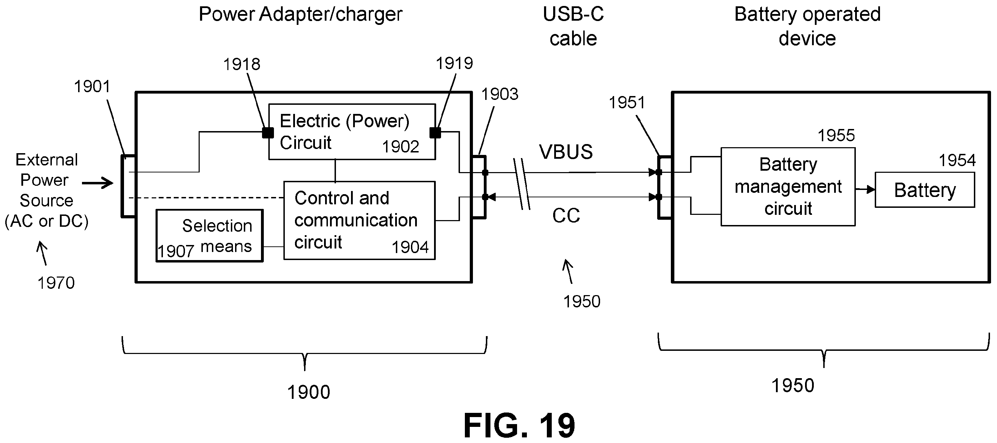

**FIG. 19 to FIG. 23** show high-level block-diagrams of illustrative examples of a power adapter device or charger device according to embodiments of the present invention, connected to a rechargeable device. These Figures can be seen as specific implementations or variants of FIG. 16, and are intended to explain particular aspects of certain embodiments.

**FIG. 19** shows a high-level block-diagram of an embodiment of a power adapter device 1900, which can be seen as a specific implementation or a variant of the power adapter 1600 of FIG. 16, hence, only the main differences need to be described.

The power adapter device 1900 of FIG. 19 comprises "selection means" or "configuration means" 1907, such as a button, a rotary knob, a slider, etc. which were optional in FIG. 16. Examples of "selection means" or "configurations means" in the form of mechanical objects than can be manipulated by a user, are shown and discussed above (see e.g.

FIG. 1 to FIG. 11).

The control and communication unit 1904 corresponds to the controller 1604 of FIG. 16, but the name used in FIG. 19 makes clear that it is configured to control the "electric circuit" to provide a certain voltage, and/or to open or close one or more switches (not shown), comprising at least one switch that connects the output node 1919 with the VBUS line of the USB-C cable, and to communicate with the battery operated device.

The USB-C cable typically comprises 24 lines, but only the VBUS lines and the CC lines are illustrated. The voltage signal provided by the electric circuit (e.g. electric power circuit) 1902 is provided on the VBUS lines. The control and communication unit 1904 communicates via the CC lines with the battery operated device 1950.

In FIG. 19, a simple block-diagram is provided for the battery operated device 1950, comprising: a USB-C input port 1951, a battery management circuit 1955 and a rechargeable battery 1954. As illustrated, this battery management circuit 1955 is connected to the VBUS lines for receiving power from the power adapter device, and is connected to the CC lines for communicating with the control and communication circuit 1904.

One of the reasons for showing this block-diagram is to show that the power adapter device 1900 has no direct access to the battery 1954, which creates a prejudice in the field that a charger device cannot influence the charging power that is applied to the battery, but as explained above, this prejudice is not entirely correct, because the power adapter of the present invention can indeed influence the maximum power that is provided to the battery operated device.

Described in simple terms, this power adapter device works as follows:

1) a state (e.g. a default state, button pressed or released, position of the rotary knob, position of the slider), e.g. a state of selection means or of configuration means is detected by the control and communication circuit 1904, and the power adapter or charger device 1900 is configured in the first or the second mode of operation;

2) if configured in the first mode of operation, one or more first power profiles is/are advertised to the battery operated device via the CC lines, using a first list of data objects (DO's, e.g. PDO's), for example comprising PDO1(5V,3A) and PDO2(9V,3A), for relatively fast charging the battery;

3) if configured in the second mode of operation, which may be the default mode of operation at start-up), one or more second power profiles is/are advertised to the battery operated device via the CC-lines, using a second list of data objects (DO's, e.g. PDO's), different from the first power profile(s), for example comprising PDO1(5V,1A) and PDO2(9V,0.55 A), for relatively slow charging the battery. The maximum power that can be delivered in the second configuration mode is lower than the maximum power that can be provided in the first configuration mode.

4) the battery management circuit 1955 and the control and communication unit 1904 communicate with each other, referred to as "negotiate" about one of the source capabilities offered by the power adapter device 1900;

5) if an agreement is reached, the control and communication unit 1904 sets or configures or controls the electric (power) circuit 1902 and/or the external power source 1970 to provide (e.g. pass or generate) the voltage that was agreed upon, and to provide this voltage signal on the VBUS lines (e.g. by closing a switch, not shown, when the voltage is stable);

6) the power adapter provides the voltage that was agreed upon, and the battery operated device must ensure that it does not draw more current than agreed upon, and the battery operated device charges the battery 1954 using the power it receives from the power adapter or charger device.

As described above, many variants are possible, for example: the "selection means" may comprise a mechanical item that can be manipulated by a user, such as a push button, a rotary knob, a, 2-position button, a switch, but the "selection means" or "configuration means" may also comprise a technique (e.g. implemented in software instructions) to detect an orientation of the USB-C cable, or be based on one or more sensors incorporated in the power adapter (e.g. accelerometer or magnetic sensor), or the selection means may also be incorporated in the cable (e.g. a push button in one of the connectors of the cable).

The USB-C cable 1950 may be a separate cable, or may be a cable portion that is fixedly connected to the power adapter device (e.g. as illustrated in FIG. 6 or FIG. 7).

If the external power source is an AC source, the input port 1901 may comprise an AC plug, and the electric power circuit has an AC/DC convertor, and no communication is performed between the AC source and the control and communication unit 1904. The electric circuit may comprise a first voltage convertor stage, for example an AC/DC convertor for converting an AC voltage to a first DC voltage (e.g. a 220V or 110V AC voltage to a fixed 20V DC voltage), and a second voltage convertor stage, for example a controllable DC/DC convertor for converting the first DC voltage to a second DC voltage lower or equal to the first voltage (e.g. 5V, or 9V, or 15V, etc.).

However, if the input port 1901 of the power adapter device is a USB-C input connector, the control and communication unit does communicate with the external power source, e.g. via its CC lines (not shown on the input side). In extremis, in this case, the power adapter device can be a very simple device having two USB-C connectors (e.g. as illustrated in FIG. 7 to FIG. 11) that acts as a gateway between an external charger (with a USB-C port) and the battery operated device 1950. The control and communication circuit 1904 may comprise a single processor or two processors, configured to negotiate for example one or more (relatively) high power PDO's with the external charger 1970, and advertise this or these high power PDO's to the battery operated device 1950 when configured in the first configuration mode, but advertise lower power PDO's (i.e. mentioning a lower maximum allowed current for corresponding voltages) when configured in the second configuration mode.

While not shown in FIG. 19, the power adapter device 1900 may further comprise for example one or more LEDs, one or more temperature sensors, a non-volatile memory, etc.

**FIG. 20** shows another high-level block-diagram of an embodiment of a power adapter device 2000, which can be seen as a specific implementation or a variant of the power adapter 1600 of FIG. 16, and/or as a variant of the power adapter 1900 of FIG. 19, hence only the main differences will be described. Everything else mentioned above is also applicable here, mutatis mutandis.

The USB-C cable and the battery operated device are not shown in FIG. 20, only the VBUS line and the CC-line.

The main difference between the power adapter 2000 of FIG. 20 and the power adapter 1900 of FIG. 19 is that the power adapter 2000 further comprises "current measurement means" 2020, and that the "selection means" 2007 are not absolutely required.

In FIG. 20 the current measurement means are shown as a separate block, but it may also be part of the electric power circuit. Important, however, is that the control and communication unit 2004 can obtain a digital value of the actual current being drawn by the battery operated device, e.g. periodically or upon request. The current measurement means may comprise e.g. a shunt resistor, one or more magnetic sensor elements (e.g. a Hall sensor), one or more magneto-resistive (MR) elements, (e.g. GMR, TMR, XMR).

"Selection means" may be present, e.g. to select between a first mode of operation (also referred to as fast charging mode) and a second mode of operation (also referred to as slow charging mode)", but need not be present, in which case the device always operates in the second configuration mode.

The power adapter of FIG. 20, when configured in the second mode of operation, works as follows:

1) one or more first power profiles is/are advertised to the battery operated device via the CC lines, using a first list of data objects (DO's, e.g. PDO's), for example comprising PDO1(5V,3A) and PDO2(9V,3A), for relatively fast charging the battery;

2) a power negotiation takes place between the power adapter and the battery operated device;

3) if an agreement is reached, the power adapter 2000 provides the voltage that was agreed upon, and the battery operated device is allowed to charge its battery in a relatively fast manner for a period of time, during which the power adapter measures the actual current drawn by the battery operated device using the "current measurement means" 2020. The underlying idea is that most battery operated devices will draw the maximum current they can get and they can use for fast charging their battery. This maximum current depends not only on the capabilities of the power adapter, but also on the type of battery and the electronics inside the battery operated device. For example, in the experiment of FIG. 15, the smartphone draws approximately up to 2.2 to 2.4 Amps at 9V, even though the 9V-PDO allowed 3 Amps.

4) the power adapter 2000 calculates the power drawn by the device, e.g. by multiplying the selected voltage and the measured current, (in the example of FIG. 15 : 9V *(2.2 to 2.4)A = about 20 W, and calculates maximum current values for one or more PDO's having a fixed voltage of e.g. 5V, 9V, 12V, 15V, 20V, such that the power associated with that PDO is approximately equal to the measured power multiplied by a predefined ratio, e.g. a ratio in the range from 20% to 70%, e.g. equal to about 20%, or equal to about 25%, or equal to about 30%, or equal to about 35%, or equal to about 40%, or equal to about 45%, or equal to about 50%, or equal to about 55%, or equal to about 60%, or equal to about 65%, or equal to about 70%, but not higher than 3A. In an embodiment a ratio of 25% is implemented, and a second list of PDO's is determined as follows:

ratio=25%,
measured power = 20W,

$$\text{reduced power} = \text{ratio} * \text{measured power} = 25\% * 20W = 5W,$$

List2=PDO1(5V,1A), and optionally also one or more of the following: PDO2(9V,0.55A), PDO3(12V,0.41A), PDO4(15V,0.33A), PDO5(20V,0.25A), depending on the capabilities of the power adapter device and/or the external power supply;

5) the second list of source capabilities with one or more second power profiles (e.g. using DO's or PDO's) is advertised to the battery operated device via the CC-lines.

6) a negotiation takes place between the power adapter and the battery operated device,

7) if an agreement is reached, the control and communication unit 2004 controls or configures or sets the electric (power) circuit 2002 and/or the external power source to provide (e.g. pass or generate) the voltage that was agreed upon, and to provide this voltage signal on the VBUS lines (e.g. by closing a switch, not shown, when the voltage is stable);

8) the power adapter provides the voltage that was agreed upon, and the battery operated device must ensure that it does not draw more current than agreed upon, and the battery operated device charges the battery using the power it receives from the power adapter or charger device.

If the selection means 2007 is present, a user can configure the power adapter 2020 in the first mode of operation (i.e. fast charging mode), in which case the battery powered device can charge its battery in a fast manner; or the user can configure the power adapter 2020 in the second mode of operation, in which case the procedure described above will be followed, and the battery will be charged with a reduced power. This will take more time to charge the battery, but the lifetime of the battery and thus of the battery powered device is hereby prolonged.

If the selection means 2007 is not present, the power adapter 2000 will always charge in reduced power mode (except for the small period as part of step 3), for measuring the "high" current the battery powered device would normally draw, if the current would not be limited.

In the procedure described above, the power adapter 2000 does not need to perform current measurement in step 8). In a variant it could measure the current being drawn (or the power being consumed), and if it is detected that the battery powered device draws more current or more power than a certain threshold, (e.g. 10% more than agreed upon) the power adapter may stop providing power, as a safety measure.

In another or a further variant, the power adapter would repeatedly, e.g. periodically measure the current and/or the power being drawn, and if the current or power drawn is less than a predefined threshold (e.g. less than a predefined value, or less than a predefined percentage of the current or power measured in step 3), the power adapter would stop providing power. In this way, the power adapter prevents the battery powered device to charge its battery up to the full 100%, thereby prolonging the lifetime of the battery, because fully charging a battery, also known as over-charging, may be quite stressful for a battery.

In another of a further variant, the calculated reduced power is compared to a predetermined minimum charging power, such that the predetermined minimum charging power is selected as reduced power in case the calculated reduced power is too low. For example, the minimum charging power may be 4W, and the reduced power can be selected using the function max(predetermined minimum charging power, ratio * measured power). The ratio may be a predefined value.

FIG. 21 shows another high-level block-diagram of an embodiment of a power adapter device 2100, which can be seen as a specific implementation or a variant of the power adapter 1600 of FIG. 16, and/or as a variant of the power adapter 1900 of FIG. 19, hence only the main differences will be described. Everything else mentioned above is also applicable here, mutatis mutandis.

The main differences between the power adapter 2100 of FIG. 21 and the power adapter 1900 of FIG. 19 is that the control and communication circuit 2104 (also referred as controller) is connected to the data-lines (D) of the USB-C connector 2103. This allows the controller 2104 to perform an enumeration process and to retrieve device identification information of the battery powered device via the D-pins, e.g. using the USB protocol. The power adapter 2100 also comprises a non-volatile memory (e.g. flash) that contains predefined power profiles (e.g. in the form of one or more DO's or PDO's or source capabilities lists) for various types of devices.

As can be seen, the selection means or configuration means 2107 are optional. If present, the power adapter device 2100 may comprise a first ("fast charging") and a second ("slow charging") mode of operation, and the selection means can be used to configure the power adapter in the first or the second mode. If no selection means are present, the power adapter device 2100 would comprise only the second mode of operation, which can be described in simple terms to work as follows:

1) a USB-enumeration is performed on the USB-C connector, and enumeration information is retrieved from the battery powered device. This enumeration information may include information such as type of device, device-ID, produce-ID, etc.

2) the control and communication circuit 2104 searches in its non-volatile memory for a suitable charging profile, based on the information obtained from the enumeration process. In an embodiment, this involves a look-up in a database containing predefined profiles as a function of a device-ID, but the present invention is not limited hereto. The database may for example comprise a list of power values as a function of a device-ID, or may contain one or more pairs of values corresponding to a voltage and a corresponding current. In one embodiment, the database contains "fast charging" values, and reduced power values are calculated in a subsequent step, e.g. taking into account a predefined ratio, or a variable ratio associated with a position of the selection means 2107, if present. In another embodiment, the database already contains "slow charging values".

3) A second list of source capabilities with one or more suitable power profiles (e.g. in the form of one or more DO's or PDO's) containing values corresponding to a lower power than the power that would normally be used by the rechargeable device in fast charging mode) are advertised to the device, via the CC-lines.

As an example, the rechargeable device may be identified as a smartphone with a particular product-ID or device-ID or device category, and a lookup in the database may yield a fast charging power value of 20W. Assuming that the power adapter uses a ratio of 25% (e.g. as a predefined value, or derived from the selection means 2107), a second list of source capabilities with the values PDO1(5V,1A) and PDO2(9V,0.5A) may be advertised;

4) a power negotiation takes place between the power adapter and the rechargeable device;

5) and if an agreement is reached, the power adapter provides the voltage signal that was agreed upon, and the battery operated device makes sure that it does not draw more current than agreed upon, and charges the battery.

In a variant of FIG. 21, the power adapter 2100 has a rotary knob, for example as illustrated in FIG. 3 or FIG. 4 or FIG. 5, and a user cannot only select between a first mode (corresponding to MAX) and a second mode (e.g. 25%), but also also select a ratio to be used. In this way, the time required for charging can be influenced in a more granular way.

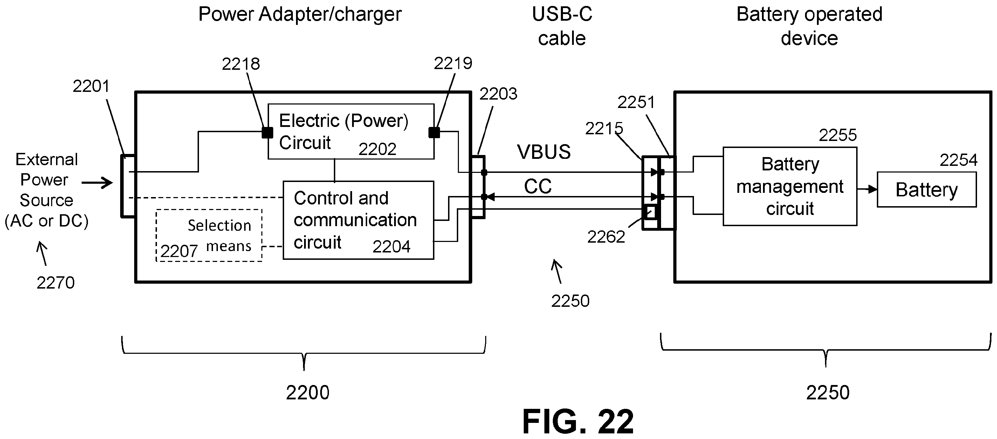

FIG. 22 shows another high-level block-diagram of an embodiment of a power adapter device 2200, which can be seen as a specific implementation or a variant of the power adapter 1600 of FIG. 16, and/or as a variant of the power adapter 1900 of FIG. 19, hence only the main differences will be described. Everything else mentioned above is also applicable here, mutatis mutandis.

The main differences between the power adapter 2200 of FIG. 22 and the power adapter 1900 of FIG. 19 is that the power adapter 2200 further comprises at least one temperature sensor 2262, preferably incorporated in a plug portion 2215 of a connector of the USB-C cable 2250. This temperature sensor will measure a temperature indicative of, or at least related to a temperature of the rechargeable device 2250. The temperature sensor may be a digital temperature sensor arranged for outputting a digital temperature signal. Alternatively, the temperature sensor may comprise a temperature sensing element comprising at least two terminals arranged for outputting an analog signal indicative of the temperature. When an infrared sensor in incorporated in a plug portion 2215 of the connector, the plug portion 2215 may comprise an opening configured for allowing IR radiation from the casing of the rechargeable device (e.g. a lateral edge of a phone) to reach the infrared sensor. The opening may be a void, or comprise IR-transparent material.

Optionally the power adapter 2200 of FIG. 22 further comprises a second temperature sensor for measuring an ambient temperature. The second temperature sensor may e.g. be incorporated in the proximal connector of the USB-C-cable, or somewhere in the housing of the power adapter 2200.

As can be seen, the selection means or configuration means 2207 are optional. If present, the power adapter device 2200 may comprise a first ("fast charging") and a second ("slow charging") mode of operation, and the selection means can be used to configure the power adapter in the first or the second mode. If no selection means are present, the power adapter device 2200 would comprise only the second mode of operation, which can be described in simple terms to work as follows:

1) The control and communication circuit 2204 of the power adapter measures at least one temperature, e.g. by reading out the temperature sensor 2262 embedded in the USB cable connector (e.g. an IR temperature sensor measuring the phone housing temperature, or a solid state temperature sensor). The temperature sensor 2262 may be connected via extra connection lines (non-standard USB-C cable), or via the D+/D- lines (which are normally not connected for a charger device). If only one temperature sensor is present, the initial temperature value may be considered indicative of an ambient temperature.

2) The power adapter 2200 advertises an initial second list of source capabilities, e.g. comprising the following DO's or PDO's: PDO1(5V,3A) and PDO2(9V,3A).

3) a power negotiation takes place between the power adapter 2200 and the battery operated device 2250;

4) and if an agreement is reached, the power adapter 2200 provides the voltage signal that was agreed upon, and the battery operated device makes sure that it does not draw more current than agreed upon, and starts charging the battery.

5) the power adapter 2200 repeatedly, e.g. periodically (e.g. every minute) measures at least one temperature using the at least one temperature sensor 2262, and updates, if needed, the data objects (e.g. DO's or PDO's) as a function of the measured at least one temperature (e.g. as a function of a difference between the most recent temperature value and the initial temperature, or e.g. as a function of a difference between the two measured temperature values) in a control loop that keeps the temperature difference within predefined boundaries. For example, by reducing the allowed power associated with the DO's or PDO's of the second list if the temperature difference is higher than a first threshold value (e.g. 10°C), and by increasing the allowed power associated with the DO's or PDO's of the second list if the temperature difference is smaller than a second threshold value (e.g. smaller than 5°C), smaller or equal to the first threshold value. For example, the control loop is implemented as an on-off control loop, and the power adapter updates the data objects from a first state to a second state when an absolute temperature threshold is crossed. The threshold may be comprised in a range of temperature between 25°C and 35°C, for example 28°C, or 30°C). In another example, the control loop can be implemented as a PID control loop, for example when the temperature threshold is reached.

In an embodiment, the first and second threshold value are predefined values.

In an embodiment, the control and communication unit 2204 is furthermore configured for performing an enumeration on the USB-C connector, and the first and second threshold value are derived from data obtained from the enumeration process. The threshold value(s) may be obtained from a local database stored in a non-volatile memory (e.g. flash), connected to the control and communication unit, e.g. based on a product-ID or device-ID or the like.

In a variant, the USB-C cable contains a wire-split, and a second or further temperature sensor is incorporated in this wire-split. In an embodiment, this second or further temperature sensor may be configured to be mounted on a surface of a smartphone, e.g. using a suction cup.

In another variant of FIG. 19 or FIG. 20, the power adapter does not necessarily comprise a temperature sensor, but repeatedly, e.g. periodically provides a varying or updated second list of source capabilities, containing power profiles, e.g. in the form of DO's or PDO's for allowing the rechargeable device to alternatingly charge at relatively high power during one or more first time periods (e.g. even numbered time slots), and to charge at a reduced power during one or more second time periods (e.g. odd numbered time slots). By not constantly providing the rechargeable device the highest power it could use to charge its battery, the battery temperature is reduced, e.g. in an open-loop control manner, e.g. by alternatingly providing a second list of source capabilities with relatively high power values, and another second list of source capabilities with relatively lower power values.

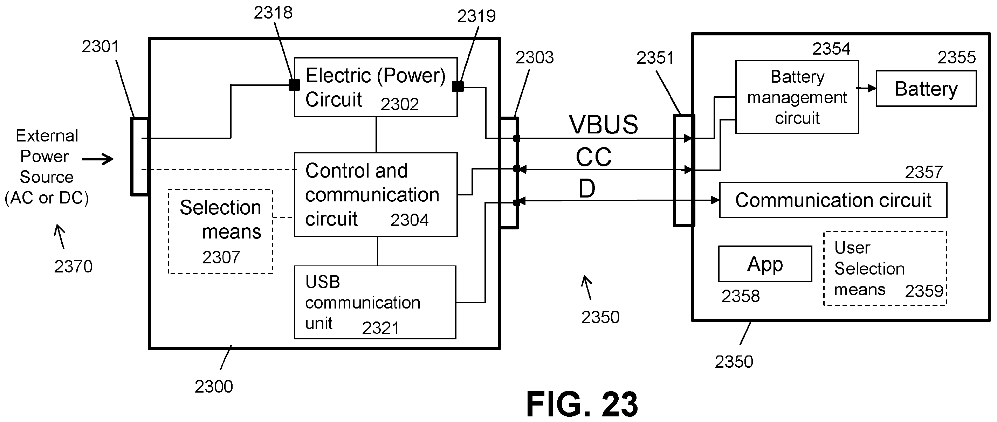

FIG. 23 shows another high-level block-diagram of an embodiment of a power adapter device 2300, which can be seen as a specific implementation or a variant of the power adapter 1600 of FIG. 16, and/or as a variant of the power adapter 1900 of FIG. 19, hence only the main differences will be described. Everything else mentioned above is also applicable here, mutatis mutandis.

The power adapter device 2300 has a USB communication unit 2321 for exchanging information with a communication circuit 2357 of the battery powered device 2350 via the D+/D- lines of the USB-C cable, and the battery powered device (e.g. a smartphone) has operating system (OS) and optionally an App (software application). The OS and/or the App may have hardcoded information for a particular device (e.g. a particular smartphone), or may implement User Selection means 2359 for allowing a user to make a section. This may be implemented as a virtual push-button, a virtual rotary knob, a virtual slider, etc. with similar functionality as described in FIG. 1 to FIG. 5.

The power adapter 2300 would work in much the same way as the power adapter 1900 of FIG. 19, except that at least some of the configuration information, or additional information is obtained via the App 2358 or via the OS (operating system). The information may comprise one or more of the following: first or second mode of operation (e.g. to "fast charge" or "slowly charge"), user-programmable parameters or settings (such as e.g. max. power value, max. temperature or max. temperature increase, or max. temperature difference, the default mode: fast or slow), etc. In case of a smartphone, the App may be a software program part of the OS or that can be downloaded, and the user interface may comprise a touchscreen of the smartphone. For example, the software program may be configured for displaying digital selection means on the smartphone touchscreen when a charging cable is connected, allowing the user to select the charging mode. The digital selection means may be triggered when a charging cable is connected and displayed as a notification, or on a lock-screen of the smartphone, such that a user can select the charging mode in a convenient manner, without needing to unlock the smartphone. The default charging mode may be configurable. For example, the default charging mode may be a slow-charging mode, or eco-mode, and the user may be able to switch to fast-charging mode. In a variant of the present invention, the rechargeable device 2350 is adapted for detecting when a charging cable is attached (e.g. trigger the software program), for displaying digital selection means on a display (e.g. a touchscreen) and configuring the battery management circuit 2354 of the rechargeable device 2350 according to at least a first or second charging mode (e.g. a fast charging mode or an eco-charging mode) in response to a selection from the user. In case of a classical phone without a touchscreen, the user interface may comprise keystrokes. In case of a laptop computer, the App may be a software program that can be downloaded or be part of the OS, and the user interface may comprise an LCD screen and keyboard or mouse input.

FINALLY,

The present invention is explained assuming that the power adapter has a "USB-C connector" (e.g. 103 in FIG. 1, 603 in FIG. 6, 1403 in FIG. 14, 1603 in FIG. 16, 1903 in FIG. 19, etc.) for providing information and power to the rechargeable device, and that the rechargeable device has a "USB-C port" (e.g. 1651 in FIG. 16, 1951 in FIG. 19, etc.) for receiving said information and for receiving power from the power adapter device, but the present invention is not limited thereto, and will also work with other another suitable "connector" as part of the power adapter and/or for another suitable "port" as part of the rechargeable device, in particular for a connector and/or a port having one or more voltage-lines (e.g. similar to VBUS), and one or more communication or configuration lines (e.g. similar to CC-lines), and optionally also one or more data lines (e.g. similar to D). This "other" connector or port is preferably rotation symmetric. In particular embodiments, the rechargeable devices have a "Lightning port" instead of said USB-C port.

REFERENCES (module 100):

| | | | | |
|---|---|---|---|---|
| -00 | power adapter device | -50 | rechargeable device |
| -01 | input port | -51 | USB-C port |
| -02 | electrical circuit | -52 | processor |
| -03 | USB-C connector | -53 | power management unit |
| -04 | controller | -54 | battery |
| -05 | non-volatile memory, (e.g. flash) | -55 | battery management circuit |
| -06 | LED | -56 | user selection means |
| -07 | selection means | -57 | USB communication circuit |
| -08 | temperature sensor | -58 | App |
| -10 | button | -59 | user selection means |
| -11 | rotary button | | |
| -12 | AC plug portion | -60 | USB-C cable |
| -13 | USB-C cable portion | -61 | plug portion |
| -14 | housing | -62 | temperature sensor |
| -15 | plug portion | | |
| -16 | second USB-C connector | -70 | external power source |
| -17 | second plug portion | | |
| -18 | input node (of electrical power circuit) | | |
| -19 | output node (of electrical power circuit) | | |
| -20 | current measurement means | | |
| -21 | USB communication unit | | |

**Claims**

1.  A power adapter device (1600) for charging a rechargeable device (1650) having a USB-C port (1651) and a processor (1652) for communicating over the USB-C port (1651) and a power management unit (1653) connected to a rechargeable battery (1654); the power adapter device comprising:

    - an input port (1601) for receiving input power from an external power source (1670);
    - a USB-C connector (1603) connectable to said USB-C port (1651) of said rechargeable device (1650) for providing output power;
    - an electrical circuit (1602) having an input node (1618) connected to said input port (1601) for receiving said input power, and having an output node (1619) connected to said USB-C connector (1603) for providing said output power;
    - a controller (1604) connected to the USB-C connector (1603) and configured for communicating with the processor (1652) of the rechargeable device (1650) in accordance with a predefined protocol;

    wherein the power adapter device (1600) has a first mode of operation wherein the controller (1604) is configured to inform the rechargeable device (1650) of first source capabilities the power adapter device is capable to deliver, by providing a first list of Data Objects comprising at least one Data Object with a first supply voltage value and an associated first current value;
    **characterised in that**
    the power adapter device (1600) is configurable in a second mode of operation to inform the rechargeable device (1650) at least once of second source capabilities that includes at least one capability with said first supply voltage and an associated second current value smaller than the first current value, and to configure the electrical circuit (1602) accordingly.

2.  A power adapter device (1600) according to claim 1,

wherein the protocol is compatible with the USB Power Delivery specification;
and wherein the Data Objects are Power Data Objects according to the USB Power Delivery specification;
and wherein the controller (1604) is configured for informing the source capabilities via the CC lines of the USB-C connector (1603).

3. A power adapter device (1600) according to any of the previous claims,

wherein the controller (1604) of the power adapter device (1600) is configured to perform a negotiation over the CC lines of the USB-C connector (1603);
and wherein the controller (1604) of the power adapter device is configured to control the electrical circuit (1602) based on an outcome of the negotiation.

4. A power adapter device (1600) according to any of the previous claims,
wherein, when the power adapter device is configured in the second mode of operation, the controller (1604) is configured to inform the processor (1652) at least once of said second source capabilities by providing a second list of Data-Objects comprising at least one Data Object with said first supply voltage value and said associated second current value.

5. A power adapter device (1600) according to any of the previous claims,
wherein the controller (1604) is configured to determine a minimum acceptable power that the rechargeable device (1650) is willing to accept, and to provide an output power compatible with that minimum acceptable power.

6. A power adapter device (1600) according to any of the claims 1 to 4,

wherein the second list of Data Objects comprises at least one Data Object with a first fixed supply voltage and a third associated current value together defining a first power value (P1), and one Data Object with a second fixed supply voltage and a fourth associated current value together defining a second power value (P2);
wherein the fourth associated current value is chosen such that a ratio (P2/P1) of the second power and the first power is a value in the range from 101% to 120%.

7. A power adapter device (1600) according to any of the previous claims,
wherein the power adapter device further comprises configuration means or selection means (1607) or mechanical manipulation means for allowing a user to configure the power adapter device to operate in the first mode of operation, or in the second mode of operation, or to change or toggle an initial mode or a previously selected mode of operation.

8. A power adapter device (1600) according to any of the previous claims,

wherein the controller (1604) of the power adapter device is connected to data-lines (D) of the USB-C cable to communicate with a processor (1652) of the rechargeable device (1650);
and wherein the rechargeable device (1650) comprises a software program for allowing a user to select the first or second mode of operation;
and wherein the controller (1604) is configured for receiving the selected mode of operation, and for applying this mode of operation.

9. A power adapter device (1600) according to any of the previous claims,
wherein the first list consists of a first predefined number of Data Objects having predefined values, and wherein the second list consists of a second predefined number of Data Objects having predefined values.

10. A power adapter device (1600) according to any of the claims 1 to 8,

wherein the power adapter device has communication means to communicate data over the USB-bus;
and wherein the controller (1604) is configured to obtain information about the rechargeable device (1650) using USB enumeration;
and wherein the controller (1604) is further configured to provide at least one or both of the first list of source capabilities and the second list of source capabilities based on the obtained information.

11. A power adapter device (1600) according to any of the claims 1 to 8,

wherein the power adapter device further comprises means for determining an output current provided on the VBUS lines;

wherein the power adapter device, when configured in the second mode of operation, first advertises the first list of DOs, and allows the portable device to charge its battery during a first period of time in accordance with this first list, while measuring the amount of current drawn by the rechargeable device, and to determine a first power value;

and wherein the power adapter device subsequently advertises at least once reduced source capabilities by providing the second list of one or more DOs containing a fixed supply voltage value and an associated current value together defining a second power value smaller than the first power value, for example determined as a predefined fraction of the first power value.

12. A power adapter device (1600) according to any of the previous claims,

adapted for receiving a temperature value indicative of a temperature of the rechargeable device (1650) and/or further comprises a temperature sensor (1608) communicatively connected to the controller (1604) of the power adapter device, for measuring a temperature value indicative of a temperature of the rechargeable device (1650); and wherein the power adapter device, when configured in the second mode of operation, is further configured for adjusting an amount of output power that can be delivered to the rechargeable device (1650) as a function of the measured temperature, by updating one or more current values of at least one DO of the second list, and/or by removing DOs from the list, and/or by adding DOs to the list; and to inform the rechargeable device (1650) of these updated source capabilities; and to adjust the electrical circuit (1602) correspondingly, if needed.

13. A power adapter device (600) according to any of the previous claims,

further comprising a USB-C compatible cable portion (613) having a first end proximal to the power adapter device and operatively connected to the electrical circuit (1602), and having a second end distal to the power adapter device comprising said USB-C connector (1603) connectable to the USB-C port (1651) of said rechargeable device (1650); wherein the USB-C compatible cable portion (613) further comprises a temperature sensor (608) located at the second cable end, and communicatively connected to the controller (1604) of the power adapter device; and wherein the power adapter device, when configured in the second mode of operation, is further configured for adjusting an amount of output power that can be delivered to the rechargeable device as a function of the measured temperature.

14. A power adapter device (1300; 1600) according to any of the previous claims,

wherein the controller further comprises a timer; and wherein the controller (1604) is further configured for determining a first time when a USB-C cable (1360; 1660) is connected or disconnected from the USB-C connector (1303) or from the USB-C port, and for determining a second time when the USB-C cable (1360; 1660) is disconnected or reconnected to the USB-C connector (1303) or to the USB-C port, and for determining a time difference between the first time and the second time; and wherein the controller (1604) is further configured for selecting or changing a mode of operation based on the measured time period.

15. A power adapter device (1600) according to any of the previous claims,

wherein the controller (1604) is further configured for detecting when a USB-C cable (1660) is being connected to the USB-C connector (1603), and for detecting an orientation of the USB-C cable (1660) at the power adapter side; and wherein the power adapter device is further configured for selecting the first mode of operation when a first predefined orientation is detected, and for selecting the second mode of operation when a second predefined orientation is detected.

# EP 4 518 080 B1

**Patentansprüche**

1. Leistungsadaptervorrichtung (1600) zum Aufladen einer wiederaufladbaren Vorrichtung (1650) mit einem USB-C-Anschluss (1651) und einem Prozessor (1652) zum Kommunizieren über den USB-C-Anschluss (1651) und einer Leistungsverwaltungseinheit (1653), die mit einer wiederaufladbaren Batterie (1654) verbunden ist; wobei die Leistungsadaptervorrichtung umfasst:

   - einen Eingangsanschluss (1601) zum Aufnehmen von Eingangsleistung von einer externen Leistungsquelle (1670);
   - einen USB-C-Verbinder (1603), der mit dem USB-C-Anschluss (1651) der wiederaufladbaren Vorrichtung (1650) zum Bereitstellen von Ausgangsleistung verbunden werden kann;
   - eine elektrische Schaltung (1602) mit einem Eingangsknoten (1618), der mit dem Eingangsanschluss (1601) zum Aufnehmen der Eingangsleistung verbunden ist, und mit einem Ausgangsknoten (1619), der mit dem USB-C-Verbinder (1603) zum Bereitstellen der Ausgangsleistung verbunden ist;
   - eine Steuerung (1604), die mit dem USB-C-Verbinder (1603) verbunden ist und ausgelegt ist, mit dem Prozessor (1652) der wiederaufladbaren Vorrichtung (1650) gemäß einem vordefinierten Protokoll zu kommunizieren;

      wobei die Leistungsadaptervorrichtung (1600) einen ersten Betriebsmodus aufweist, wobei die Steuerung (1604) ausgelegt ist, die wiederaufladbare Vorrichtung (1650) über erste Quellfunktionalitäten zu informieren, die die Leistungsadaptervorrichtung liefern kann, durch Bereitstellen einer ersten Liste mit Datenobjekten, die mindestens ein Datenobjekt mit einem ersten Versorgungsspannungswert und einem zugehörigen ersten Stromwert umfasst;
      **dadurch gekennzeichnet, dass**
      die Leistungsadaptervorrichtung (1600) in einem zweiten Betriebsmodus ausgelegt werden kann, um die wiederaufladbare Vorrichtung (1650) mindestens einmal über zweite Quellfunktionalitäten zu informieren, die mindestens eine Funktionalität mit der ersten Versorgungsspannung und einem zugehörigen zweiten Stromwert enthalten, der kleiner als der erste Stromwert ist, und um die elektrische Schaltung (1602) dementsprechend auszulegen.

2. Leistungsadaptervorrichtung (1600) nach Anspruch 1,

   wobei das Protokoll mit der USB-Power-Delivery-Spezifikation kompatibel ist;
   und wobei die Datenobjekte Leistungsdatenobjekte gemäß der USB-Power-Delivery-Spezifikation sind;
   und wobei die Steuerung (1604) ausgelegt ist, über die Quellfunktionalitäten über die CC-Leitungen des USB-C-Verbinders (1603) zu informieren.

3. Leistungsadaptervorrichtung (1600) nach einem der vorhergehenden Ansprüche,

   wobei die Steuerung (1604) der Leistungsadaptervorrichtung (1600) ausgelegt ist, eine Verhandlung über die CC-Leitungen des USB-C-Verbinders (1603) durchzuführen;
   und wobei die Steuerung (1604) der Leistungsadaptervorrichtung ausgelegt ist, die elektrische Schaltung (1602) auf Grundlage eines Ergebnisses der Verhandlung zu steuern.

4. Leistungsadaptervorrichtung (1600) nach einem der vorhergehenden Ansprüche,
   wobei, wenn die Leistungsadaptervorrichtung im zweiten Betriebsmodus ausgelegt ist, die Steuerung (1604) ausgelegt ist, den Prozessor (1652) zumindest einmal über die zweiten Quellfunktionalitäten zu informieren, durch Bereitstellen einer zweiten Liste mit Datenobjekten, die mindestens ein Datenobjekt mit dem ersten Versorgungsspannungswert und dem zugehörigen zweiten Stromwert umfasst.

5. Leistungsadaptervorrichtung (1600) nach einem der vorhergehenden Ansprüche,
   wobei die Steuerung (1604) ausgelegt ist, eine minimale akzeptable Leistung zu ermitteln, die die wiederaufladbare Vorrichtung (1650) bereit ist, zu akzeptieren, und eine mit dieser minimalen akzeptablen Leistung kompatible Ausgangsleistung zu liefern.

6. Leistungsadaptervorrichtung (1600) nach einem der Ansprüche 1 bis 4,

   wobei die zweite Liste mit Datenobjekten mindestens ein Datenobjekt mit einer ersten festen Versorgungsspannung und einem dritten zugehörigen Stromwert, die zusammen einen ersten Leistungswert (P1) definieren, und ein Datenobjekt mit einer zweiten festen Versorgungsspannung und einem vierten zugehörigen Stromwert, die zusammen einen zweiten Leistungswert (P2) definieren, umfasst; wobei der vierte zugehörige Stromwert so gewählt ist, dass ein Verhältnis (P2/P1) der zweiten Leistung und der ersten Leistung ein Wert im Bereich von 101 % bis 120 % ist.

7. Leistungsadaptervorrichtung (1600) nach einem der vorhergehenden Ansprüche, wobei die Leistungsadaptervorrichtung ferner Konfigurationsmittel oder Auswahlmittel (1607) oder mechanische Manipulationsmittel umfasst, um einem Benutzer zu ermöglichen, die Leistungsadaptervorrichtung so auszulegen, dass sie im ersten Betriebsmodus oder im zweiten Betriebsmodus arbeitet, oder einen Anfangsmodus oder einen vorher ausgewählten Betriebsmodus zu ändern oder zu wechseln.

8. Leistungsadaptervorrichtung (1600) nach einem der vorhergehenden Ansprüche,

   wobei die Steuerung (1604) der Leistungsadaptervorrichtung mit Datenleitungen (D) des USB-C-Kabels verbunden ist, um mit einem Prozessor (1652) der wiederaufladbaren Vorrichtung (1650) zu kommunizieren; und wobei die wiederaufladbare Vorrichtung (1650) ein Softwareprogramm umfasst, um einem Benutzer zu ermöglichen, den ersten oder den zweiten Betriebsmodus auszuwählen; und wobei die Steuerung (1604) ausgelegt ist, den ausgewählten Betriebsmodus zu empfangen und diesen Betriebsmodus anzuwenden.

9. Leistungsadaptervorrichtung (1600) nach einem der vorhergehenden Ansprüche, wobei die erste Liste aus einer ersten vordefinierten Anzahl von Datenobjekten mit vordefinierten Werten besteht und wobei die zweite Liste aus einer zweiten vordefinierten Anzahl von Datenobjekten mit vordefinierten Werten besteht.

10. Leistungsadaptervorrichtung (1600) nach einem der Ansprüche 1 bis 8,

    wobei die Leistungsadaptervorrichtung Kommunikationsmittel aufweist, um Daten über den USB-Bus zu kommunizieren; und wobei die Steuerung (1604) ausgelegt ist, Informationen über die wiederaufladbare Vorrichtung (1650) unter Verwendung von USB-Enumeration zu erhalten; und wobei die Steuerung (1604) ferner ausgelegt ist, mindestens eine oder beide der ersten Liste mit Quellfunktionalitäten und der zweiten Liste mit Quellfunktionalitäten auf Grundlage der erhaltenen Informationen bereitzustellen.

11. Leistungsadaptervorrichtung (1600) nach einem der Ansprüche 1 bis 8,

    wobei die Leistungsadaptervorrichtung ferner Mittel zum Ermitteln eines an den VBUS-Leitungen bereitgestellten Ausgangsstroms umfasst; wobei die Leistungsadaptervorrichtung, wenn sie im zweiten Betriebsmodus ausgelegt ist, zuerst die erste Liste von Datenobjekten bekanntmacht und der tragbaren Vorrichtung erlaubt, ihre Batterie während einer ersten Zeitspanne in Übereinstimmung mit dieser ersten Liste aufzuladen, während die Leistungsadaptervorrichtung die von der wiederaufladbaren Vorrichtung aufgenommene Strommenge misst, und einen ersten Leistungswert zu ermitteln; und wobei die Leistungsadaptervorrichtung nachfolgend mindestens einmal reduzierte Quellfunktionalitäten ankündigt, indem sie die zweite Liste mit einem oder mehreren Datenobjekten bereitstellt, die einen festen Versorgungsspannungswert und einen zugehörigen Stromwert enthalten, die zusammen einen zweiten Leistungswert definieren, der kleiner als der erste Leistungswert ist, der beispielsweise als ein vordefinierter Bruchteil des ersten Leistungswerts ermittelt wird.

12. Leistungsadaptervorrichtung (1600) nach einem der vorhergehenden Ansprüche,

    die zum Empfangen eines Temperaturwerts ausgelegt ist, der auf eine Temperatur der wiederaufladbaren Vorrichtung (1650) hinweist, und/oder ferner einen Temperatursensor (1608) umfasst, der mit der Steuerung (1604) der Leistungsadaptervorrichtung kommunikativ verbunden ist, zum Messen eines Temperaturwerts, der auf eine Temperatur der wiederaufladbaren Vorrichtung (1650) hinweist; und wobei die Leistungsadaptervorrichtung, wenn sie im zweiten Betriebsmodus ausgelegt ist, ferner ausgelegt ist, eine Menge an Ausgangsleistung anzupassen, die an die wiederaufladbare Vorrichtung (1650) geliefert werden kann, als Funktion der gemessenen Temperatur, durch Aktualisieren eines oder mehrerer Stromwerte mindestens eines Datenobjekts der zweiten Liste und/oder durch Entfernen von Datenobjekten aus der Liste und/oder durch Hinzufügen von Datenobjekten zur Liste;

und die wiederaufladbare Vorrichtung (1650) über diese aktualisierten Quellfunktionalitäten zu informieren; und die elektrische Schaltung (1602) bei Bedarf entsprechend anzupassen.

13. Leistungsadaptervorrichtung (600) nach einem der vorhergehenden Ansprüche,

ferner umfassend einen USB-C-kompatiblen Kabelabschnitt (613) mit einem ersten Ende proximal zur Leistungsadaptervorrichtung, das mit der elektrischen Schaltung (1602) wirkverbunden ist, und mit einem zweiten Ende distal zur Leistungsadaptervorrichtung, das den USB-C-Verbinder (1603) umfasst, der mit dem USB-C-Anschluss (1651) der wiederaufladbaren Vorrichtung (1650) verbunden werden kann;

wobei der USB-C-kompatible Kabelabschnitt (613) ferner einen Temperatursensor (608) umfasst, der am zweiten Kabelende angeordnet ist und kommunikativ mit der Steuerung (1604) der Leistungsadaptervorrichtung verbunden ist;

und wobei die Leistungsadaptervorrichtung, wenn sie im zweiten Betriebsmodus ausgelegt ist, ferner ausgelegt ist, eine Menge an Ausgangsleistung, die an die wiederaufladbare Vorrichtung geliefert werden kann, als eine Funktion der gemessenen Temperatur anzupassen.

14. Leistungsadaptervorrichtung (1300; 1600) nach einem der vorhergehenden Ansprüche, wobei die Steuerung ferner einen Zeitgeber umfasst;

und wobei die Steuerung (1604) ferner ausgelegt ist, einen ersten Zeitpunkt zu ermitteln, zu dem ein USB-C-Kabel (1360; 1660) mit dem USB-C-Verbinder (1303) oder dem USB-C-Anschluss verbunden wird oder von diesem getrennt wird, und einen zweiten Zeitpunkt zu ermitteln, zu dem das USB-C-Kabel (1360; 1660) vom USB-C-Verbinder (1303) oder dem USB-C-Anschluss getrennt wird oder wieder mit diesem verbunden wird, **und** eine Zeitdifferenz zwischen dem ersten Zeitpunkt **und** dem zweiten Zeitpunkt zu ermitteln;

**und** wobei die Steuerung (1604) ferner ausgelegt ist, einen Betriebsmodus auf Grundlage der gemessenen Zeitspanne auszuwählen oder zu ändern.

15. Leistungsadaptervorrichtung (1600) nach einem der vorhergehenden Ansprüche,

wobei die Steuerung (1604) ferner ausgelegt ist, zu erkennen, wann ein USB-C-Kabel (1660) mit dem USB-C-Verbinder (1603) verbunden wird, **und** eine Ausrichtung des USB-C-Kabels (1660) am Leistungsadapterende zu erkennen;

**und** wobei die Leistungsadaptervorrichtung ferner ausgelegt ist, den ersten Betriebsmodus auszuwählen, wenn eine erste vordefinierte Ausrichtung erkannt wird, **und** den zweiten Betriebsmodus auszuwählen, wenn eine zweite vordefinierte Ausrichtung erkannt wird.

**Revendications**

1. Dispositif adaptateur d'alimentation (1600) pour charger un dispositif rechargeable (1650) présentant un port USB-C (1651) et un processeur (1652) pour communiquer via le port USB-C (1651) et une unité de gestion d'alimentation (1653) connectée à une batterie rechargeable (1654) ; le dispositif adaptateur d'alimentation comprenant :

- un port d'entrée (1601) pour recevoir une puissance d'entrée provenant d'une source d'alimentation externe (1670) ;
- un connecteur USB-C (1603) pouvant être connecté audit port USB-C (1651) dudit dispositif rechargeable (1650) pour fournir une puissance de sortie ;
- un circuit électrique (1602) présentant un nœud d'entrée (1618) connecté audit port d'entrée (1601) pour recevoir ladite puissance d'entrée, et présentant un nœud de sortie (1619) connecté audit connecteur USB-C (1603) pour fournir ladite puissance de sortie ;
- un dispositif de commande (1604) connecté au connecteur USB-C (1603) et configuré pour communiquer avec le processeur (1652) du dispositif rechargeable (1650) selon un protocole prédéfini ;

dans lequel le dispositif adaptateur d'alimentation (1600) présente un premier mode de fonctionnement dans lequel le dispositif de commande (1604) est configuré pour informer le dispositif rechargeable (1650) des premières capacités de source que le dispositif adaptateur d'alimentation est capable de délivrer, en fournissant une première liste d'objets de données comprenant au moins un objet de données avec une première valeur de tension d'alimentation et une première valeur de courant associée ;

**caractérisé en ce que**

le dispositif adaptateur d'alimentation (1600) peut être configuré dans un second mode de fonctionnement pour informer le dispositif rechargeable (1650) au moins une fois des secondes capacités de source qui comporte au moins une capacité avec ladite première tension d'alimentation et une deuxième valeur de courant associée inférieure à la première valeur de courant, et pour configurer le circuit électrique (1602) en conséquence.

2. Dispositif adaptateur d'alimentation (1600) selon la revendication 1,

dans lequel le protocole est compatible avec la spécification USB Power Delivery ;
et dans lequel les objets de données sont des objets de données de puissance conformément à la spécification USB Power Delivery ;
et dans lequel le dispositif de commande (1604) est configuré pour informer les capacités de source par l'intermédiaire des lignes CC du connecteur USB-C (1603).

3. Dispositif adaptateur d'alimentation (1600) selon l'une quelconque des revendications précédentes,

dans lequel le dispositif de commande (1604) du dispositif adaptateur d'alimentation (1600) est configuré pour effectuer une négociation sur les lignes CC du connecteur USB-C (1603) ;
et dans lequel le dispositif de commande (1604) du dispositif adaptateur d'alimentation est configuré pour commander le circuit électrique (1602) sur la base d'un résultat de la négociation.

4. Dispositif adaptateur d'alimentation (1600) selon l'une quelconque des revendications précédentes, dans lequel, lorsque le dispositif adaptateur d'alimentation est configuré dans le second mode de fonctionnement, le dispositif de commande (1604) est configuré pour informer le processeur (1652) au moins une fois desdites secondes capacités de source en fournissant une seconde liste d'objets de données comprenant au moins un objet de données avec ladite première valeur de tension d'alimentation et ladite deuxième valeur de courant associée.

5. Dispositif adaptateur d'alimentation (1600) selon l'une quelconque des revendications précédentes, dans lequel le dispositif de commande (1604) est configuré pour déterminer une puissance acceptable minimale que le dispositif rechargeable (1650) est prêt à accepter, et pour fournir une puissance de sortie compatible avec cette puissance acceptable minimale.

6. Dispositif adaptateur d'alimentation (1600) selon l'une quelconque des revendications 1 à 4,

dans lequel la seconde liste d'objets de données comprend au moins un objet de données avec une première tension d'alimentation fixe et une troisième valeur de courant associée définissant ensemble une première valeur de puissance (P1), et un objet de données avec une seconde tension d'alimentation fixe et une quatrième valeur de courant associée définissant ensemble une seconde valeur de puissance (P2) ;
dans lequel la quatrième valeur de courant associée est choisie de telle sorte qu'un rapport (P2/P1) de la seconde puissance et de la première puissance soit une valeur dans la plage de 101 % à 120 %.

7. Dispositif adaptateur d'alimentation (1600) selon l'une quelconque des revendications précédentes, dans lequel le dispositif adaptateur d'alimentation comprend en outre un moyen de configuration ou un moyen de sélection (1607) ou un moyen de manipulation mécanique permettant à un utilisateur de configurer le dispositif adaptateur d'alimentation pour qu'il fonctionne dans le premier mode de fonctionnement, ou dans le second mode de fonctionnement, ou pour changer ou faire basculer un mode initial ou un mode de fonctionnement précédemment sélectionné.

8. Dispositif adaptateur d'alimentation (1600) selon l'une quelconque des revendications précédentes,

dans lequel le dispositif de commande (1604) du dispositif adaptateur d'alimentation est connecté à des lignes de données (D) du câble USB-C pour communiquer avec un processeur (1652) du dispositif rechargeable (1650) ;
et dans lequel le dispositif rechargeable (1650) comprend un programme logiciel permettant à un utilisateur de sélectionner le premier ou le second mode de fonctionnement ;

et dans lequel le dispositif de commande (1604) est configuré pour recevoir le mode de fonctionnement sélectionné, et pour appliquer ce mode de fonctionnement.

9. Dispositif adaptateur d'alimentation (1600) selon l'une quelconque des revendications précédentes, dans lequel la première liste est constituée d'un premier nombre prédéfini d'objets de données présentant des valeurs prédéfinies, et dans lequel la seconde liste est constituée d'un second nombre prédéfini d'objets de données présentant des valeurs prédéfinies.

10. Dispositif adaptateur d'alimentation (1600) selon l'une quelconque des revendications 1 à 8,

dans lequel le dispositif adaptateur d'alimentation présente un moyen de communication pour communiquer des données sur le bus USB ;
et dans lequel le dispositif de commande (1604) est configuré pour obtenir des informations concernant le dispositif rechargeable (1650) à l'aide d'une énumération d'USB ;
et dans lequel le dispositif de commande (1604) est en outre configuré pour fournir au moins une ou les deux parmi la première liste de capacités de source et la seconde liste de capacités de source sur la base des informations obtenues.

11. Dispositif adaptateur d'alimentation (1600) selon l'une quelconque des revendications 1 à 8,

dans lequel le dispositif adaptateur d'alimentation comprend en outre un moyen pour déterminer un courant de sortie fourni sur les lignes VBUS ;
dans lequel le dispositif adaptateur d'alimentation, lorsqu'il est configuré dans le second mode de fonctionnement, annonce d'abord la première liste d'objets de données, et permet au dispositif portable de charger sa batterie pendant une première période temporelle conformément à cette première liste, tout en mesurant la quantité de courant consommée par le dispositif rechargeable, et de déterminer une première valeur de puissance ;
et dans lequel le dispositif adaptateur d'alimentation annonce ensuite au moins une fois des capacités de source réduite en fournissant la seconde liste d'un ou plusieurs objets de données contenant une valeur de tension d'alimentation fixe et une valeur de courant associée définissant ensemble une seconde valeur de puissance inférieure à la première valeur de puissance, déterminée par exemple comme une fraction prédéfinie de la première valeur de puissance.

12. Dispositif adaptateur d'alimentation (1600) selon l'une quelconque des revendications précédentes,

configuré pour recevoir une valeur de température indicative d'une température du dispositif rechargeable (1650) et/ou comprenant en outre un capteur de température (1608) relié de manière communicative au dispositif de commande (1604) du dispositif adaptateur d'alimentation, pour mesurer une valeur de température indicative d'une température du dispositif rechargeable (1650) ;
et dans lequel le dispositif adaptateur d'alimentation, lorsqu'il est configuré dans le second mode de fonctionnement, est en outre configuré pour ajuster une quantité de puissance de sortie qui peut être délivrée au dispositif rechargeable (1650) en fonction de la température mesurée, en mettant à jour une ou plusieurs valeurs actuelles d'au moins un objet de données de la seconde liste, et/ou en supprimant des objets de données de la liste, et/ou en ajoutant d'objets de données à la liste ;
et pour informer le dispositif rechargeable (1650) de ces capacités de source mises à jour ;
et pour ajuster le circuit électrique (1602) en conséquence, si nécessaire.

13. Dispositif adaptateur d'alimentation (600) selon l'une quelconque des revendications précédentes,

comprenant en outre une partie de câble compatible USB-C (613) présentant une première extrémité proximale au dispositif adaptateur d'alimentation et connectée de manière fonctionnelle au circuit électrique (1602), et présentant une seconde extrémité distale au dispositif adaptateur d'alimentation comprenant ledit connecteur USB-C (1603) pouvant être connecté au port USB-C (1651) dudit dispositif rechargeable (1650) ;
dans lequel la partie de câble compatible USB-C (613) comprend en outre un capteur de température (608) situé au niveau de la seconde extrémité du câble, et connecté de manière communicative avec le dispositif de commande (1604) du dispositif adaptateur d'alimentation ;
et dans lequel le dispositif adaptateur d'alimentation, lorsqu'il est configuré dans le second mode de fonctionnement, est en outre configuré pour ajuster une quantité de puissance de sortie qui peut être délivrée au dispositif rechargeable en fonction de la température mesurée.

14. Dispositif adaptateur d'alimentation (1300 ; 1600) selon l' une quelconque des revendications précédentes,

dans lequel le dispositif de commande comprend en outre une minuterie ;
et dans lequel le dispositif de commande (1604) est en outre configuré pour déterminer un premier moment quand un câble USB-C (1360 ; 1660) est connecté ou déconnecté du connecteur USB-C (1303) ou du port USB-C, et pour déterminer un second moment quand le câble USB-C (1360 ; 1660) est déconnecté ou reconnecté au connecteur USB-C (1303) ou au port USB-C, et pour déterminer une différence temporelle entre le premier moment et le second moment;
et dans lequel le dispositif de commande (1604) est en outre configuré pour sélectionner ou modifier un mode de fonctionnement sur la base de la période temporelle mesurée.

15. Dispositif adaptateur d'alimentation (1600) selon l' une quelconque des revendications précédentes,

dans lequel le dispositif de commande (1604) est en outre configuré pour détecter le moment où un câble USB-C (1660) est connecté au connecteur USB-C (1603), et pour détecter une orientation du câble USB-C (1660) à l'extrémité de l'adaptateur d'alimentation ;
et dans lequel le dispositif adaptateur d'alimentation est en outre configuré pour sélectionner le premier mode de fonctionnement lorsqu'une première orientation prédéfinie est détectée, et pour sélectionner le second mode de fonctionnement lorsqu'une seconde orientation prédéfinie est détectée.

112

110

106a

106b

ECO

FAST

103

114

100

**FIG. 1**

212

211

5W

10W

20W

203

214

200

**FIG. 2**

312

311

25%

MAX

303

314

300

**FIG. 3**

412

411

25%

50%

MAX

403

414

400

**FIG. 4**

512

511

25%    MAX

503

514

500    **FIG. 5**

612

610

613

614

608

615

603

600

**FIG. 6**

700

706

710

713a

713b

714

Power IN

717

716

**(from power source, e.g. battery pack)**

Power OUT

715

703

**(to rechargeable device, e.g. to phone, to laptop, ...)**

# FIG. 7

800

806

810

POWER IN     POWER OUT

803

814

816

**(from power source, e.g. battery pack)**

**(to rechargeable device, e.g. to phone, to laptop, ...)**

# FIG. 8

900

913

Power IN

917

916

↑

(from power source,
e.g. battery pack)

910

906

Power OUT

915

903

⇩

(to rechargeable device,
e.g. to phone, to laptop, ...)

# FIG. 9

1000

1013b

1013a

Power IN

1016

1017

↑

(from power source,
e.g. battery pack)

1010

1006

Power OUT2

Power OUT1

1015b

1015a

1003b

1003a

⇩

(to rechargeable device,
e.g. phone, FAST charge)

⇩

(to rechargeable device,
e.g. phone, SLOW charge)

# FIG. 10

1100

1113

1110

Power IN

1117

1116

(from power source,
e.g. battery pack)

1106

Power OUT2
(FAST)

1103b

Power OUT1
(SLOW)

1103a

(to rechargeable device,
e.g. phone, SLOW charge)

# FIG. 11

**FIG. 12A**

**FIG. 12B**

**FIG. 13**

**FIG. 14**

**FIG. 15**

**FIG. 16**

EP 4 518 080 B1

max. temperature = 38°C

# FIG. 17A

max. temperature = 27°C

# FIG. 17B

PDO2 (9V, 0.5A)

PDO1 (5V, 0.8A)

# FIG. 18

FIG. 19

**FIG. 20**

**FIG. 21**

FIG. 22

FIG. 23

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017293335 A1
- US 2021318738 A1
- US 2017279270 A1
- US 2020373843 A1

**Non-patent literature cited in the description**

- Lightning port. Apple Inc., 12 September 2012